# EUROPEAN PATENT SPECIFICATION

(11) **EP 3 189 210 B1**
(45) Date of publication and mention of the grant of the patent: **12.06.2019**
(21) Application number: 15837841.4
(22) Date of filing: 30.08.2015
(51) Int. Cl.: F01B 29/10, F16K 31/02

(54) **A VALVE WITH A SHAPE MEMORY ALLOY BASED ACTUATOR**
VENTIL MIT AKTUATOR BASIEREND AUF EINER FORMGEDÄCHTNISLEGIERUNG
SOUPAPE DOTÉE D'UN ACTIONNEUR À BASE D'ALLIAGE À MÉMOIRE DE FORME

(30) Priority: 01.09.2014 IL 23440214
(43) Date of publication of application: 12.07.2017
(73) Proprietor: Rafael Advanced Defense Systems Ltd, 3102102 Haifa (IL)
(72) Inventor: VALENTIN, Nov, 3467002 Haifa (IL)
(74) Representative: Becker Kurig Straus
(86) International application number: PCT/IL2015/050871
(87) International publication number: WO 2016/035067

(56) References cited:
- US-A1- 2005 121 636
- US-A1- 2010 038 569
- US-A1- 2012 151 913
- US-A1- 2013 167 377
- US-B1- 6 247 678

## Description

### Field of the Invention -

The embodiments that are described hereinafter belong to the field of valves in general, and specifically to the valves utilized in the aerospace industry wherein use is made of an actuator that is based on employing a Shape Memory Alloy parts (hereinafter - SMA).

### Background of the Invention -

The utilization of valves is common in the aerospace industry for opening and closing of passages that are (respectively) normally closed or normally open, for example opening a passage way for flow of fuel to the steering engine of a satellite, a passage way that is normally closed, and it is required only once to be opened in a timed and reliable manner, an opening that takes place under severe environmental conditions (space conditions).

When referring to this example, note that until recently valves using pyrotechnical actuators were commonly used. Generally, a pyrotechnically actuating valve has several drawbacks - activating the pyrotechnical component induces a mechanical shock on the valve and its vicinity. This happens due to the fact that what is happening is a detonation of an explosive material (or at least a thrusting material), in a manner that might cause structural damage. An additional drawback that is the result of using a pyrotechnical component is the fact that gases at relatively high pressures are liable to be generated in a manner that can cause a breach of sealing components in the valve and the generation of contamination within the valve (up to a degree of terminating the satellite operation). All this and more - an additional drawback stems from the fact that as is the case with a chemical substance, the explosive or the thrusting material of the pyrotechnical component becomes less effective as time passes (due to an aging process) and as a rule it is sensitive to environmental conditions, and even more so due to the environmental conditions prevailing in space. An additional drawback that is expressed when the operation of the valve is being relied on detonation of a pyrotechnical component is the fact that this is a non-reversible operation by its nature and hence there is a difficulty to ensure high reliability based on tests of that specific component that is finally installed at that valve and sent to space. In other words, it is not possible to detonate the specific pyrotechnic component that is meant to be installed in the valve and its reliability is therefore derived only from initiated detonation tests that are statistical in their nature of a collection of identical components, but such that are not the specific pyrotechnical component that would be eventually installed in the valve and sent to space. As an outcome result, valves equipped with pyrotechnical actuators that are intended to be operating in space, became multi-parts devices - so for example - to assure redundancy, sometimes, two pyrotechnical components are installed in them in tandem, one alongside the other, so that if one of them fails - the other does function and the valve's mission is accomplished. It is superfluous to point out that this plurality of parts is an obvious severe disadvantage in terms of the high cost involved in designing a multi-part valve and the need that such a multi-parts valve has to withstand strict space industry quality requirements.

Recently, several solutions were displayed, that are not pyrotechnical but rather based on exploiting SMA. Thus for example, Patent US 8,499,779 describes a system, methods and apparatus of a Nitinol valve. The patent presents valves with actuators that include an actuator rod from a material that extends or shrinks along a lengthwise axis from the instant of adsorbing the heat energy, from the kind of nickel - titanium (NiTi) alloys that is called Nitinol (commercial name) in the professional jargon. The configurations of these non-pyrotechnic valves that are described and illustrated in said publication include, all of them, actuators made of Nitinol material wherein at the time of the valve operation the outer surface (area) of the actuator is exposed to the flowing of the gas or the liquid that is passing in the valve from the time of its opening. Trouble is, that in applications of a spacecraft (in accordance with the example we were treating) the discussed gas or liquid is sometimes Hydrazine - an N₂H₄ chemical compound that although it suits for contact with (for example) - Titanium or stainless steel, it does not fit contact with Nitinol (another example of such problematic liquid is IRFNA). This and more, in the configuration of the valves that are described and illustrated in this publication, the heating up means are external (located around external circumference surface area of the actuator), and hence, from the instant of activating them as is needed for activating the valve, the act of heating up exposes also the gas or the liquid that is meant to flow through the valve, to the temperature increase, this in a manner that might harm them while they are passing in the valve (as much as is talked about in materials sensitive to temperature increase, for example - 63°C is enough in order to damage Hydrazine). An additional drawback that is found in the valves configurations that are illustrated and described in this publication is that they are of a construction that is not modular, in a manner that it makes it difficult to disassemble the actuator component from them or to install it in them.

US 2013/0167377 A1 discloses a valve with shape memory alloy based actuator.

Another example for a publication which suggests a solution that is not pyrotechnic but based on SMA for opening a flow passage, is found in patent application publication US 2012/0011843. The publication describes a shape memory alloy trigger for a pressure relief valve. The publication presents an opening at the end of an elongated tank, for relieving the pressure from the tank, through a conventional quarter-turn valve that its actuation unto a quarter-turn movement as said, is executed through an elongated SMA component which is located along the tank and in parallel to it. The SMA component serves, according to the publication, as a heat sensor that extends along the length dimension of the tank, in a manner that its exposure to temperatures that are above its austenite transformation temperature, leads to opening of the valve which is at the tip of the tank. The publication does not designate the described trigger means to aerospace applications and the SMA technology is exploited in it as a passive heat sensor and therefore, does not excite by a timed and controlled actuation of an external heat source.

Hence, at the period before the present invention, there was a need in valves for opening passages that are normally closed or for closing passages that are normally open, for example - opening a passage for fuel in a steering engine of a satellite that is normally closed and it is required to "open it only once", in a timed and reliable manner, an opening that occurs in severe environmental conditions (space conditions) wherein those valves could not suffer from the problems allocated with using pyrotechnic components at which we pointed above and concurrently those needed valves will be suited for making flow of Hydrazine and IRFNA through them and providing those capabilities while having a modular and relatively simple construction.

### Summary of the Invention -

The invention, the subject matter of this application, provides an answer to the needs we pointed at above, by an SMA based, single use (disposable) valve.

A valve in accordance with a first aspect of the invention comprises a valve's house assembly that is formed with a lengthwise axis, and with an inlet flow opening for the passage of gas or liquid into the valve and an outlet flow opening for the passage of the gas or the liquid outwards from the valve. The valve comprises in addition, a nipple component that is given to be sheared and swept away from the time it is cut away (sheared), in a manner that in accordance to the type of the valve, when the subject is a normally closed valve - enables the passage of the gas or the liquid from the inlet flow opening to the valve's outlet opening.

The valve in accordance with the first aspect of the invention comprises additionally an actuator assembly that is suited for being installed inside the valve's house assembly along its lengthwise axis. The actuating assembly comprises heating up means, actuating component from a material that is SMA and that is given to be warmed up by the warming means in a manner which leads to its lengthening along the lengthwise axis of the valve's housing assembly, and hammer component that is suited to transfer the force that the actuating component is exerting, from the instant of heating up the actuating component along the lengthwise axis to the nipple and to subject the nipple unto a stress for its shearing. The hammer component is suited in addition to continue and propel the nipple for being shoved (away) after its shearing.

In the valve in accordance with the first aspect of the invention the inlet and outlet flow passages are substantially formed on at least one geometric plane that extends in its direction in a direction that is substantially orthogonal to the lengthwise axis of the valve's house assembly and at all times, there exists a physical demarcation (partition) between the gas or the liquid and the valve's actuating component. The valve according to the first aspect is characterized in that said nipple is usually connected to said inlet flow opening, and in that said actuating assembly comprises in addition, a springy means that is suited to cause continued propelling of said nipple following after its being severed off in order to shove said nipple away in a manner that it would not block said passage of said gas or liquid from said inlet flow opening to said outlet flow opening.

A valve according to a second aspect of the invention is comparable with that of the first aspect but is not of the normally closed-type, but rather of the normally open-type and therefore enables stopping of said gas or liquid passage from said inlet flow opening to said outlet flow opening, when the nipple component is severed of. Said valve according to the second aspect is characterized in that it additionally comprises a bracket component to which said nipple is linked to it as usually and said bracket is suited to be located in the valve's house assembly.

Still other aspects, embodiments, and advantages of these exemplary aspects and embodiments are discussed in detail below. Embodiments disclosed herein may be combined with other embodiments in any manner consistent with at least one of the principles disclosed herein, and references to "an embodiment," "some embodiments," "an alternate embodiment," "various embodiments," "one embodiment" or the like are not necessarily mutually exclusive and are intended to indicate that a particular feature, structure, or characteristic described may be included in at least one embodiment. The appearances of such terms herein are not necessarily all referring to the same embodiment.

### Brief Description of the Drawings -

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the invention. In the figures, each identical or nearly identical component that is illustrated in various figures is represented by a like numeral. For purposes of clarity, not every component may be labeled in every figure. In the figures:
**Figure No. 1** constitutes an illustration in perspective of an example valve of the normally closed type in accordance with the invention.
**Figure No. 2** constitutes a cross section side view of the valve illustrated in Fig No. 1 at a pre-actuating condition (flow passage closed).
**Figure No. 3** constitutes a cross section side view of the valve illustrated in Fig No. 1 while being in an actuated condition (while in motion and opening the flow passage).
**Figure No. 4** constitutes a cross section side view of the valve illustrated in Fig No. 1 while being in a post actuated condition (flow passage open).
**Figure No. 5** constitutes an exploded view in perspective that presents the various components of the valve illustrated in Fig. No. 1.
**Figure No. 6** constitutes a cross section view in perspective of an additional example of a normally closed type of valve in accordance with the invention - a valve with a filtering component in the flow passage (in an after actuating condition - flow passage open).
**Figure No. 7** constitutes a cross section side view in perspective of the valve illustrated in Fig. No. 6 in the pre actuating condition (flow passage closed).
**Figure No. 8** constitutes a cross section view of the valve illustrated in Fig. No. 6 (as illustrated there - in the post actuation condition - flow passage open).
**Figure No. 9** constitutes a cross section side view in perspective of an additional example of a normally closed type of valve in accordance with the invention - a valve with an independent termination mechanism for maintaining the flow passage closed, upon exposure of the valve to a high temperature (for example - in case of a fire), (The valve is illustrated with a closed flow passage).
**Figure No. 10** constitutes an illustration in perspective of an additional example of a normally closed type of valve in accordance with the invention - a valve with a mechanism providing for a rotational movement in order to open the flow passage.
**Figure No. 11** constitutes an illustration in perspective of the valve illustrated in Fig. No. 10 wherein for the sake of clarification, the valve's housing assembly is illustrated as if it is transparent.
**Figure No. 12** constitutes an illustration in perspective, partly in cross section, of the valve illustrated in Fig. No. 10.
**Figure No. 13** constitutes a cross section illustration in perspective, of the valve illustrated in Fig. No. 10.
**Figure No. 14** constitutes a local illustration in perspective, of a side cross section, of part of the valve illustrated in Fig. No. 10, in the pre actuation condition (flow passage closed).
**Figure No. 15** constitutes a local illustration of side cross section of part of the valve illustrated in Fig. No. 10, depicted while in the actuated state (while being in motion and opening the flow passage).
**Figure No. 16** constitutes a local illustration of a side cross section of a part of the valve illustrated in Fig. No. 10, depicted in its condition after being actuated (the flow passage is open).
**Figure No. 17** constitutes an exploded view in perspective that presents the various components of the valve illustrated in Fig. No. 10.
**Figure No. 18** constitutes an illustration of a cross section in perspective, of an example of a valve of the normally open type in accordance with the invention, being in the state of before actuation (the flow passage is open).
**Figure No. 19** constitutes an illustration in perspective, of the cross section, of the valve illustrated in Fig. No. 18.
**Figure No. 20** constitutes an illustration in perspective, of the cross section, of the valve illustrated in Fig. No. 18, depicted at the condition of being during actuation (being in motion to close the flow passage).
**Figure No. 21** constitutes an illustration in perspective, of the cross section, of the valve illustrated in Fig. No. 18, depicted at the condition of being after the actuation stage (flow passage is closed).
**Figure No. 22** constitutes an exploded view in perspective that presents the various components of the valve illustrated in Fig. No. 18.
**Figure No. 23** constitutes a cross section illustration of an additional valve of the normally open type in accordance with the invention - a valve without a springy means which is depicted in a pre-actuation state (the flow passage is open).
**Figure No. 24** constitutes a cross section illustration of the valve illustrated in Fig. No. 23, at the condition of being after the actuation (flow passage is closed).
**Figure No. 25** constitutes an exploded view in perspective that presents the various components of the valve illustrated in Fig. No. 23.

### Detailed Description -

At least one exemplary valve will be described below to provide an example of an embodiment of each claimed invention. No embodiment described below limits any claimed invention and any claimed invention may cover valves that differ from those described below. The claimed inventions are not limited to valves having all of the features of any one valve described below or to features common to multiple or all of the valves described below. It is possible that a valve described below is not an embodiment of any claimed invention. Any invention disclosed in a valve described below that is not claimed in this document may be the subject matter of another protective instrument, for example, a continuing patent application, and the applicant does not intend to abandon, disclaim or dedicate to the public any such invention by its disclosure in this document.

Furthermore, it will be appreciated that for simplicity and clarity of the illustrations, where considered appropriate, reference numerals may be repeated among the figures to indicate corresponding or analogous elements, in addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

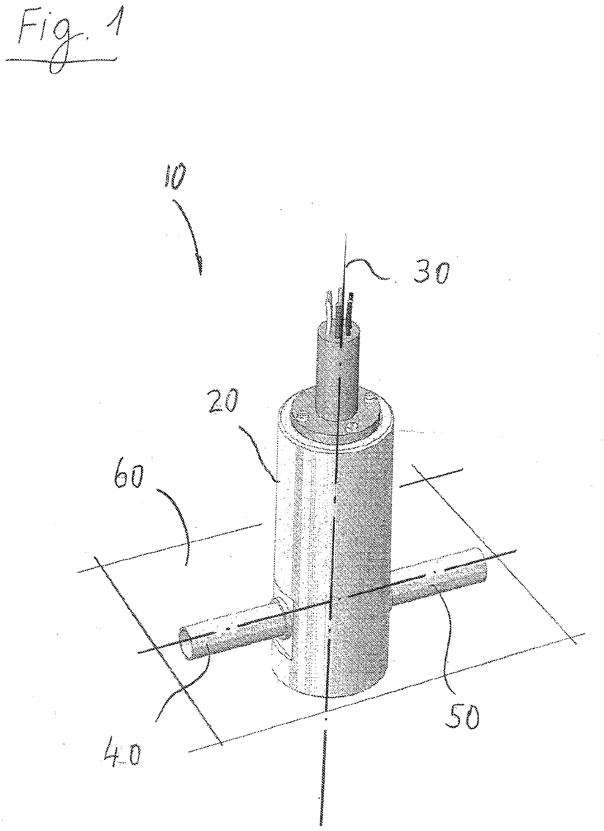

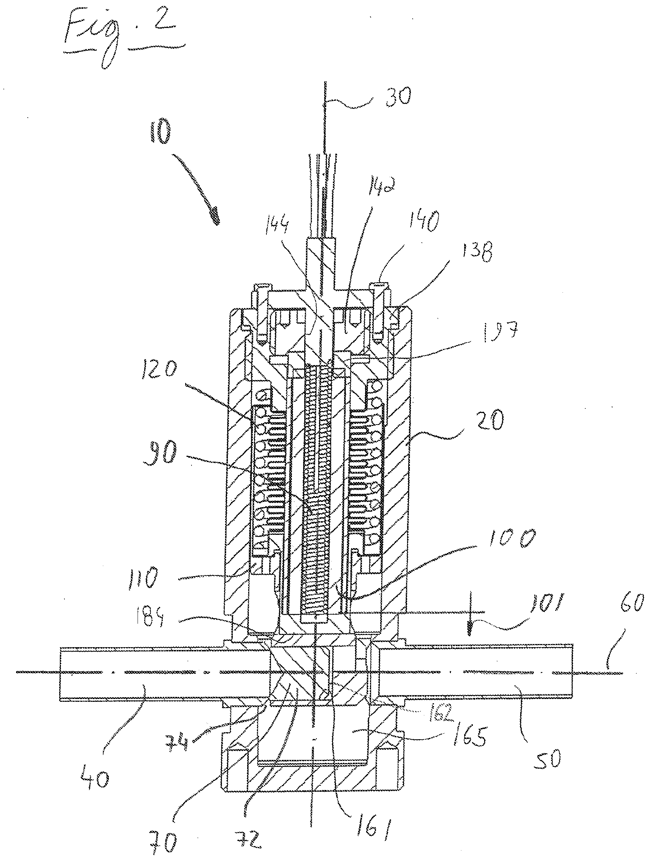

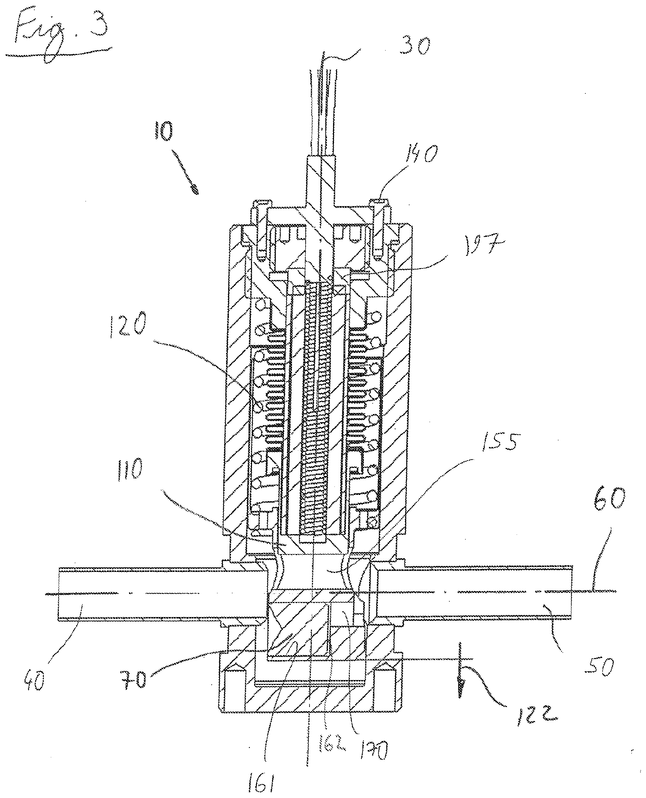

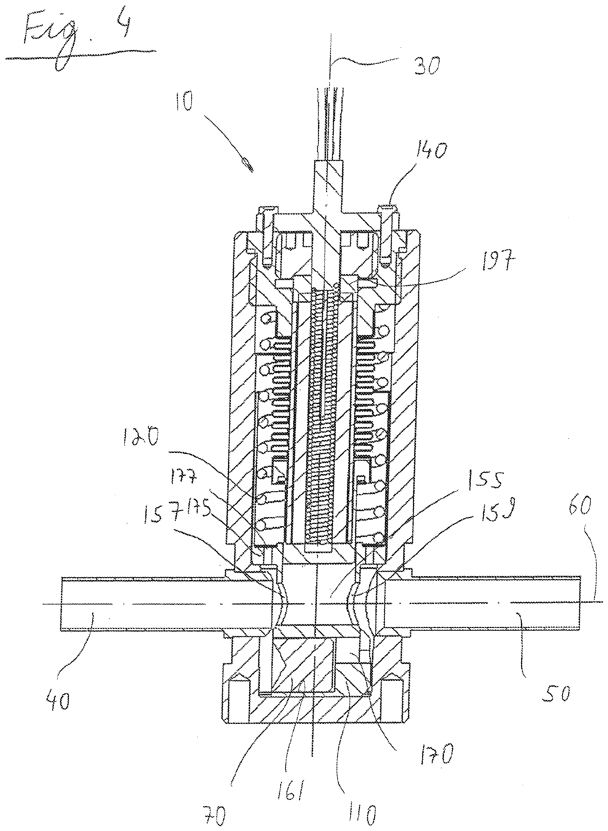

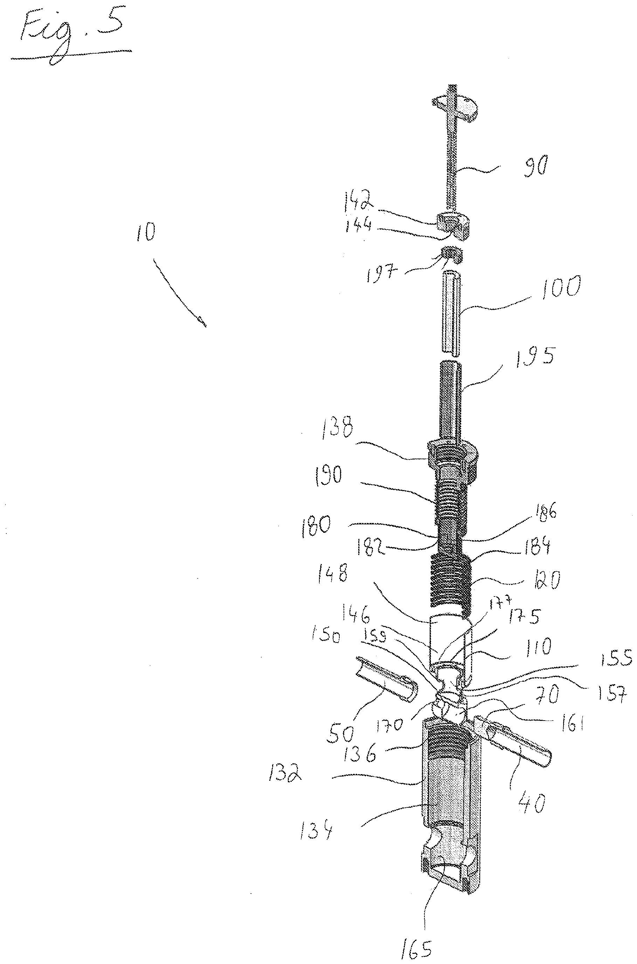

Reference is made to **figures No. 1 to No. 5.** Figure No. 1 constitutes an illustration in perspective of an example valve 10 of the normally closed type in accordance with the invention. Figure No. 2 constitutes a cross section side view of valve 10 in a pre-actuation condition (flow passage closed). Figure No. 3 constitutes a cross section side view of valve 10 while being actuated, i. e. in motion and opening of the flow passage. Figure No. 4 constitutes a cross section side view of valve 10 illustrated in the post actuation state (flow passage open). Figure No. 5 constitutes an exploded view in perspective that presents the various components of valve 10.

As is evident from the figures and as would be explained later on while referring to them, valve 10 is a single use valve of the normally closed type, which is based on SMA.

Referring to Fig. No. 1, we will notice that valve 10 comprise a valve housing assembly 20 that is formed with a length-wise axis 30 and with inlet flow opening 40 for the sake of gas or liquid flow passage into the valve and outlet flow opening 50 for gas or liquid passage outwards from the valve.

A prominent geometrical characteristic of valve 10 is the fact that the inlet flow passage into it 40 and outlet exit opening 50 from it are formed (and located) substantially on a single common plain 60 that extends in its direction wherein it is substantially perpendicular to the length axis 30 of the valve's housing assembly 20.

Let it be commented that in view of the figures and the explanations that would be given below, any professional would understand that what is discussed is a geometric characteristic per-se and there might exist deviation of the perpendicular from the plain. It is not a requirement of exact (strict) orthogonality of the perpendicular from the plain, and also (even) a deviation of for example say 5° to 30° in the inlet flow opening and outlet flow opening itself and between it and the lengthwise axis of the valve would not necessarily damage the functional operation of a valve in accordance with the invention.

In the example illustrated in the figures, the inlet opening and the outlet one, each one of them comprises a tubule that is suited to be affixed - for example by welding, to a matching bore in the valve housing assembly 20. A characteristic tubule can be made for example by turning from stainless steel or titanium in a diameter of 6.35 mm (0.25") and from the instant of being installed it would protrude from the valve's housing assembly by approximately 25 mm.

Valve 10 comprises nipple component 70 that is, usually, connected to the inlet flow opening 40, in a manner that prevents passage of the gas or the liquid to the outlet flow opening. Nipple 70 can be cut off (sheared away) from its connection to the inlet flow opening 40.

In the illustrated example, nipple 70 is formed as a kind of a bushing 72 that is formed by turning as an extension of the tubule of the inlet flow opening and its connection to the tubule is in a configuration of a circumferential weakening slot 74.

As it will be clarified below, following after the cutting away of nipple 70 at the site of circumferential weakening slot 74, its severing away from the tubule of the inlet flow opening 40 and shoving (sliding) it away from its regular place (that is illustrated in Fig. No. 2), the passage of gas or the liquid is enabled from the inlet flow opening 40 to the outlet flow opening 50 (the situation depicted in Fig. No. 4).

Valve 10 comprises also an actuating assembly 80. This actuating assembly 80 is suited to be installed inside the valve's housing assembly 20 along lengthwise axis 30.

Actuating assembly 80 includes heating up means 90. Any professional would understand that heating up means 90 is intended to excite the valve's SMA component, namely, in the illustrated example - actuating component 100, that is manufactured of, as said, from a material that is SMA (for example - NiTi), and exciting the actuating component by heating up causes a thermo-mechanic phases passage in the actuating component for obtaining its motion along length axis 30 (see in Fig. No. 2 - arrow 101) while exerting a large force - subjecting the material to high pressure of up to approximate 500 MPa.

In the illustrated example, actuating component 100 is formed as a kind of an elongated pole formed with an internal space 102. Heating up means 90 is suited to be installed inside internal space 102 for heating up the actuating component from the inside (of the actuating component).

It is possible to design the SMA so that only activating heating up means 90 to produce a temperature of approximate 100°C, would lead to the length extension of actuating component 100 along length axis 30, and this while exerting a pressure of 300 MPa. Any professional would understand that such a design assures durability (resistance) of the valve while being exposed to a relatively high environmental temperature without such relatively high environmental temperature exciting the actuating component.

There exist off the shelf heating up means that are suitable for use in such applications. Naturally, such a heating up means requires an electrical interface for its operation (for example-supply voltage +/- 28 volts, power - 70 Watt per minute and 2.5 Amp maximum current). The electrical interface is not detailed herein and every professional in this field would be able to design it by interfacing with the (available) power supply system and the command on the platform (in use) (for example - the satellite) in which the valve is mounted. An example for a heating up means is liable to be two helical 2^{∗}30 Watt quad core heater that is built in a configuration of two heater spirals with a thermocouple at their center for measuring the temperature and providing feedback to the control. Such a two spirals configuration is liable to contribute to redundancy of the system (in a manner that failure of one spiral brings about operation of the second or increase the heating power of the operating one).

Actuating component 80 comprises in addition, a hammer component 110. Hammer component 110 is suited to transfer the force that actuating component 100 would exert from the time it is heated up as said. The force transfer would occur as said along the length axis 30 (see in Fig No. 2 - in the direction of arrow 101) to nipple 70 and bias the nipple (in the illustrated example - in the region of the circumferential weakening slot 74) for a shearing strain that would lead to the cutoff of the linking between nipple 70 and input flow opening 40 (see in Fig. No. 2).

Hammer component 110 is suited in addition to continue and propel nipple 70 and sweep it away following after its shearing. See in figures No. 3 and No. 4 - springy means 120 is suited to cause for the continued propelling of nipple 70 after its shearing, for its shoving (sweeping away), in the illustrated example - along lengthwise axis 30 (see in Fig. No. 3 - arrow 122), in a manner that it would not block the passage of the gas or the liquid from inlet flow opening 40 to outlet flow opening 50.

Reference is given to describe the various components of valve 10 (and the attention is especially directed to figure No. 5 that shows, as said, an exploded view of the components of valve 10).

In this illustrated example, valve's housing assembly 20 comprises house component 132 that is formed with internal space 134. Internal space 134 extends along lengthwise axis 30 wherein it is open at one end 136 of the house component. Valve's housing assembly 20 comprise in addition, nut component 138 that is suited to be affixed to the one end 136 of housing component 132 (for example - by screw thread and welding), (see in figures No. 2 to No. 4).

As can be seen in figures No. 2 to No. 4, in the illustrated example heating up means 90 is installed on nut 138 by an array of screws 140. The valve's housing assembly 20 comprises in addition, also a plug component 142 that is suited to connect with nut component 138 (for example - by threading). Plug component 142 is formed with an opening 144.

As can be seen in figures No. 2 to No. 4, through opening 144 there is installed heating up means 90 wherein it extends along lengthwise axis 30.

Hammer component 110 is formed as a cylinder having a terraced interior space 146 that is opened at a one end 148 and closed at the other (second) end 150.

As can be seen in figures No. 2 to No. 4, hammer component 110 is suited for a movement inside internal space 134 of housing component 132 and along lengthwise axis 30.

A one end 148 of hammer component 110 is suited to contain in it a springy component 120. In the illustrated example, springy component 120 is a helical spring that leans on component 138 and biases hammer component 110, to continue and propel nipple 70, for shifting and sweeping away the nipple following the nipple shearing off (as illustrated in figures No. 3 and No. 4). Any professional would understand that as a substitute to a helical spring, it is possible to consider resorting to use an array of coned disk (namely Belleville washer) spring.

In a geometrical proximity to the second, closed end 150 of hammer component 110, a flow passage 155 is formed, that is substantially formed on a single plain 60, that from the instant of installing hammer component 110 in valve 10 (see in figures No. 3 and No. 4) extends in its direction wherein it is substantially perpendicular to the lengthwise axis 30 of housing component 132.

In the illustrated example; flow passage 155 is formed as two openings - 157 and 159 - that are located one opposite the other at the walls of the terraced space 146 of hammer component 110.

As can be seen in Fig. No. 4, flow passage 155 enables the passage of the gas or the liquid from the inlet flow opening 40 to outlet flow opening 50, following after shearing of the linking between nipple 70 to inlet flow opening 40 and the sweeping away of the nipple (in the direction of the arrow 122 as illustrated in Fig. No. 3).

The other end of hammer component 110 - the closed end 150, is formed with bracket opening 161 for accommodating nipple 70. Bracket opening 161 is formed in parallel to the plain of flow passage 155 and with a distance from it.

As can be seen in figures No. 2 to No. 4, bracket opening 161 is suited to receive nipple 70 in it and shift it (sweep it away) while it is found in it, from the instant of getting the nipple sheared from inlet flow opening 40 (in the direction of the arrow 122 as depicted in Fig. No. 3).

In the illustrated example, from the instant of its shearing, by the force of the pressure of the gas or the liquid, nipple 70 is propelled at first to a linear motion into the inside of bracket opening 161 to a space segment 162 that is formed at the end of bracket 161, and concurrently begins its shifting (sweeping away) in the direction of length axis 30 (in the direction of arrow 122 as depicted in Fig. No. 3). Any professional would understand that in this manner, of widthwise linear motion into the inside of space 162, the danger of friction being generated by the nipple that was just severed is decreasing, a potential friction which was liable to resist movement inside the hammer component space (in the direction of arrow 122 as illustrated in Fig. No. 3).

Internal space 134 of house component 132 is formed with a segment (sector) 165. Segment 165 is suited to receive into it the closed second segment 150 of hammer component 110, namely - the segment in which there is formed the bracket opening 161 for the accommodation of nipple 70, from the instant of shearing off the link between nipples 70 to inlet flow opening 40 and shifting it within bracket opening 161. See in Fig. No. 4 - reception of the closed second end 150 of hammer component 110, inside segment (sector) 165 of the inner component 70 that was severed away from its link to inlet flow opening 40 and included within inside bracket opening 161 which is formed at the end of the hammer component.

In the valve's illustrated example, the bracket opening 161 to nipple 70 (the bracket opening at which we pointed above and that is formed, as said, at the closed second end 150 of hammer component 110), is formed in addition with a flow passage means 170.

Flow passage means 170 serves to enable the gas or the liquid to flow towards nipple 70 from the instant it was severed away from the inlet flow opening 40. The flow of the gas or the liquid towards the tip of the nipple 70 after its being severed away (see in Fig. No. 4), causes the shoving of nipple 70 towards the wall of segment 165 of internal space 134 in the house component 132. Thus, shoving the nipple towards the wall generates friction between them and limits the ability of hammer component 110 to execute non desired motion after actuating the valve and opening the flow passage through it, along lengthwise axis 30, and in an opposite direction to the biasing direction of springy means (in a direction that is liable to bring about a cut-off of the flow), for example - when exposure of the valve to high acceleration or shock occurs.

The gas or the liquid flow, subject to actuating the valve and opening the flow passage through it (see in Fig. No. 4), is not limited as per the illustrated example, only to enabling the flow towards the outlet flow opening 50 and as said, in parallel, it is also utilized for shoving nipple 70 through flow passage 170. Hammer component 110 is formed as said as a cylinder having a terraced space 146. Step 175 connects between space 146 segments. Step 175 is formed, in accordance with the illustrated example, with an array of openings 177 on its circumference. As can be understood from figure No. 4 - openings 177 enables the passage of the gas or the liquid through them from inlet flow opening 40 to the hammer component space, following after severing the connection between nipple 70 to inlet flow opening 40 and shoving away the nipple from it.

We have already pointed above at a (one) prominent characteristic of a valve in accordance with the invention - the geometrical aspect according to which the inlet flow opening and the outlet flow opening are substantially formed on at least one plain (in the illustrated example - a single common plain) that extends in its direction that is substantially perpendicular to the lengthwise axis of the valve's housing assembly

An additional characteristic in the structure of a valve in accordance with the invention is the existence of a mechanical demarcation (physical divider) between the gas or the liquid and the actuating component (in the illustrated example - component 100), in all the stages - be it in the existence (see Fig. No. 2) of a closed flow passage or be it after actuating the valve - at the instant of opening the flow passage (see Fig. No. 3) and obtaining an open transient condition of the flow (Fig. No. 4). Needless to elaborate as to the fact that the existence of such mechanical demarcation as said, in valves in accordance with the invention, prevents contacts between materials that as said are liable to be non-matching from the chemical aspect (NiTi that is non matching for contact, for example with Hydrazine).

In accordance with the illustrated example, in the valve 10 example, the mechanical demarcation is obtained through additional components -

Actuating assembly 80 comprises in addition, first mechanical demarcation means 180 in a configuration resembling a cup that is suited for being installed along lengthwise axis 30 of the valve's housing assembly 20. Mechanical demarcation means 180 is formed with a bottom item 182. Reference is being made to Fig. No. 2 - its one side, the outer one - 184 of bottom 182, is suited to contact with hammer component 110 until the linkage between nipple 70 to inlet flow opening 40 is sheared off (up to the situations illustrated in figures No.3 and No. 4). Its other side, the internal one, 186 of bottom 182, is suited for contact with actuating component 100 for the sake of exerting force as said, from the instant of heating up the said actuating component on the hammer component 110.

In addition, actuating assembly 80 comprises a second mechanical demarcation means 190 in a configuration of a bellows that can be extended in its length from the instant of starting to warm up the actuating component 100 as required for the shearing of nipple 70. Reference is given to figure No. 2 - means 190 extends along lengthwise axis 30 of the valve's house assembly 20 wherein it is anchored on its one end to nut component 138 and on its other end to first demarcation means 180 (the one resembling a cup shape).

Reference is given to figures No. 2 to No. 4. Any professional would appreciate the fact that in all the stages of operation of valve 10, the first demarcation means 180 and the second, 190, divide and separate as said, all the time, between the gas and the liquid and actuating component 100.

An additional constructional component in valve 10, is insulating component 195 that - as can be seen in figures No. 2 to No.4, constitutes a part of actuating component 80. Insulating component 195 is suited to be installed on actuating component 100 and to extend along its length. In the depicted embodiment, illustrated as an example only, wherein - as we pointed above, heating up means 90 is suited to be installed inside actuating component 100 for heating up the actuating component from the inside, then any professional would understand that insulating component 195 might help to provide desirable insulation of the actuating component from the influence of environmental temperature effects and to prevent wasting energy from the instant that it is required to heat up the actuating component in order to bring about the valve's operation.

An additional constructional component in valve 10, is disk 197 that, as can be seen in figures No. 2 to No.4, from the instant of mounting it in the valve - separates between actuating assembly 80 to plug component 142.

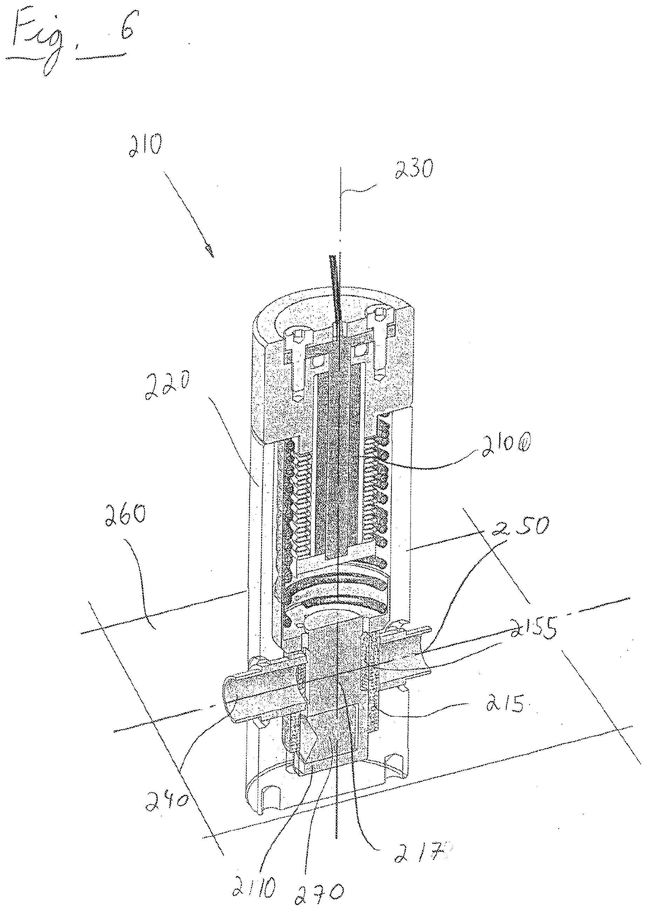

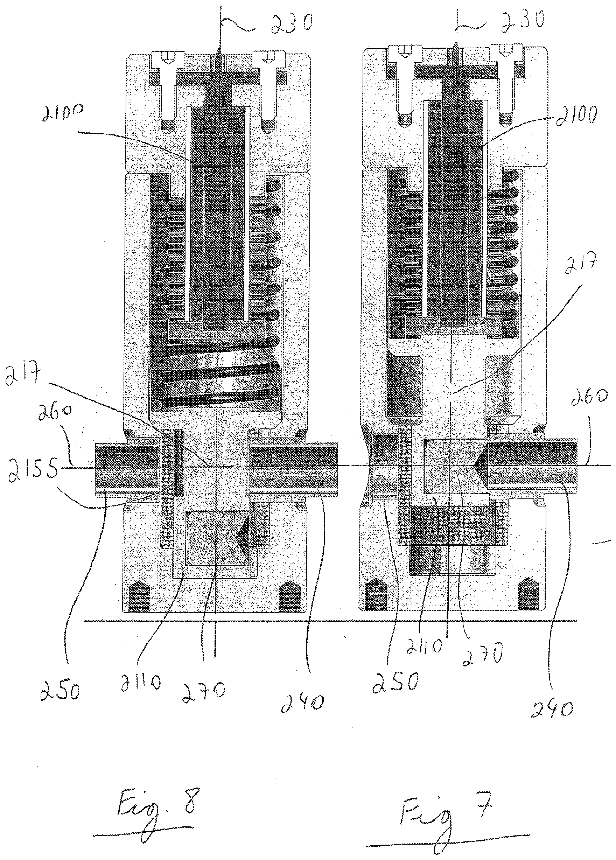

Reference is given to **figures No. 6 to No. 8**. Figure No. 6 constitutes cross section view in perspective of an additional example of a valve 210 in accordance with the invention - a normally closed type of valve equipped with a filtering component 215 in the flow passage (wherein the valve is depicted in the condition of after actuating - with flow passage open). Figure No. 7 constitutes a cross section side view of valve 210 in the pre actuating condition (flow passage closed). Figure No. 8 constitutes a cross section view of valve 210 wherein similarly to Fig. No. 6 - valve 210 is found in the condition of after activation, namely the flow passage is open.

Differently from valve 10, as it was described above while referring to figures No. 1 to No. 5, valve 210 comprises in addition a filtering component - filter means 215. Filter means 215 is suited to be installed at the valve's house assembly and to filter the gas or the liquid flow when it passes from the inlet flow opening 240 to outlet flow opening 250 after shearing off the link that existed between nipple 270 and inlet flow opening 240 and shoving nipple 270 following after it was severed (in the condition illustrated in figures No. 6 and No. 8).

Valve 210 is different from valve 10 in an additional aspect - in valve 210, flow passage 2155 is formed in hammer component 2110 as a ring like (circular) flow passage that extends around a central stem 217 that is formed in hammer component 2110.

As said, valve 210 includes in addition filter means 215. In the illustrated example, filter means 215 is formed as a sleeve with a passage opening formed on its side to accommodate the inlet flow opening with the nipple on its top. Filter means 215 is suited to be installed in the inner space of the valve's house component, around a ring like (circular) flow passage 2155. Any professional would understand that filter means 215 is liable to be made of stainless steel and enable filtering the gas or the liquid in a manner that it will also prevent sweeping away of shavings that are liable to be produced from the instant the nipple is severed off. Concurrently, in this configuration as a sleeve that is positioned around the circumference of hammer component 2110, the filter means can contribute also to limiting the capability of the hammer component 2110 to execute a non-desired movement after actuating the valve and opening the flow passage through. Namely - preventing a movement in an undesirable direction that might cause severance of the flow passage, a movement along lengthwise axis 230 and in a direction that is opposite to the direction of the biasing extracted by springy means 2120, (for example - when exposure of the valve occurs to high acceleration or shock).

Notwithstanding the differences that we pointed at above, any professional would understand that similarly to valve 10, also in valve 210 there does exist all the traits and prominent characteristic that we pointed at above - when referring to valve No. 10, namely -

The fact that inlet flow opening 240 and outlet flow opening 250 from it are substantially formed on (over) at least one plain, as in the illustrated example - over a single plain - 260. A plain that extends in its direction wherein it is substantially perpendicular to the lengthwise axis 230 of valve's house assembly 220. Moreover, also the characteristic existence of mechanical demarcation (a physical barrier) between the gas or the liquid and the actuating component (in the illustrated example component 2100), in all the stages - be it in the existence of a closed flow passage (see Fig. No. 7) or be it after actuating the valve and obtaining an open flow passage condition (figures No. 6 and No. 8).

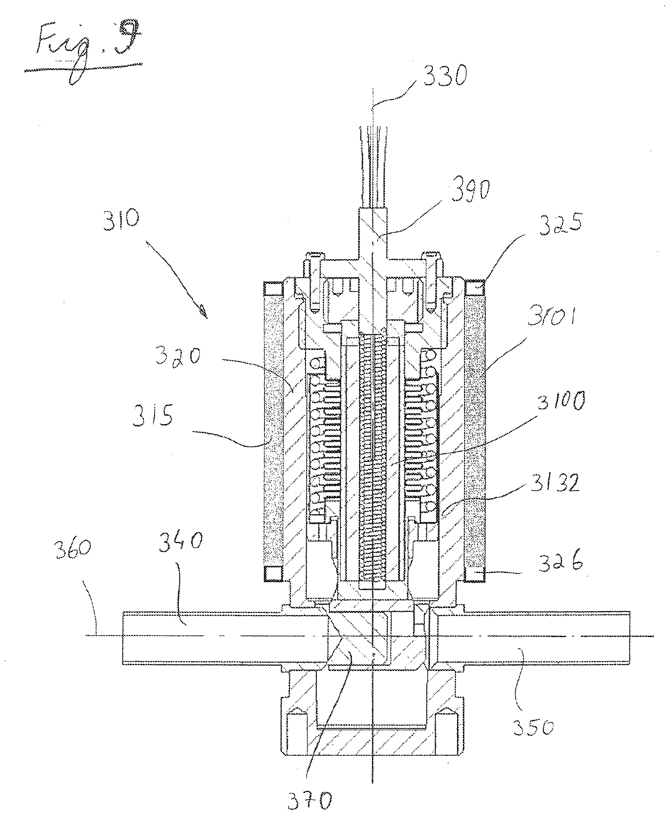

Reference is given to **figure No. 9.** Figure No. 9 is a cross section view of an additional example of a valve 310 in accordance with the invention - a valve of the normally closed type with an independent stoppage mechanism for keeping the flow passage closed even in a given situation wherein valve 310 is exposed to high temperature (for example - in case of an outbreak of fire onboard). Valve 310 is illustrated with a closed flow passage.

Differently from valves 10 and 210 as they were described above while referring (respectively) to figures No. 1 to No. 5 and No. 6 to No. 8, valve 310 comprises in addition, an independent stoppage mechanism 315 for keeping the flow passage between inlet flow opening 340 to outlet flow opening 350 so that it would stay closed even if there occurs a condition of exposure of the valve to high temperature, that normally it could have excited the actuating component 3100 and thus bring about to haphazardly opening the flow passage (without willfully activating of the heating up means 390 to act).

Accordingly, as per Fig. 9 illustrated example, stoppage means 315 is characterized in that that it comprises a second actuating component 3101 that similarly to actuating component 3100, is also being made of material that is SMA. Second actuating component 3101 is positioned alongside house component 3132 of valve's house assembly 320 and in parallel to its lengthwise axis 330. Second actuating component 3101, from the instant of warming it up by the temperature prevailing adjacent to valve 310, and being above a threshold temperature set in advance, biases house component 3132 unto a stretching stress that causes it to be extended (grow in length). The extension in length of house 3132 as a result of the strain, is in a given dimension (geometrically and along lengthwise axis 330) which is sufficient in order to prevent the severing of the link between nipple 370 and inlet flow opening 340, and this - even if the first actuating component 3100 was warmed up too (due to the exposure of the valve to high temperature) in a manner that brought about also its too growing in length.

In accordance with the illustrated example, house component 3132 is formed with shoulders 325 and 326 that are protruding from its circumference on its two ends. Second actuating component 3101 is suited to lean on the shoulders for biasing, as said, of house component 3132, unto a stress that causes its lengthening to be beyond the lengthening that is expected for (first) actuating component 3100 when exposed to a similar temperature (and thus stoppage means 315 neutralizes and prevents the undesirable operation of the valve).

Notwithstanding the difference we discussed above, any professional would understand that similarly to valves 10 and 210, also in valve 310 there exists all those prominent characteristics that we pointed at above when we referred to valves 10 and 210, namely-

The fact that inlet flow opening 340 and outlet flow opening 350 are formed substantially on at least one plain, in the illustrated example - on a one single plain 360 that extends in its direction wherein it is substantially orthogonal to the lengthwise axis 330 of the valve's house assembly 320. As well as the characteristic existence of mechanical demarcation (physical barrier), between the gas or the liquid and the two actuating components (in the illustrated example, components 3100 and 3101), at all the operational stages of the valve.

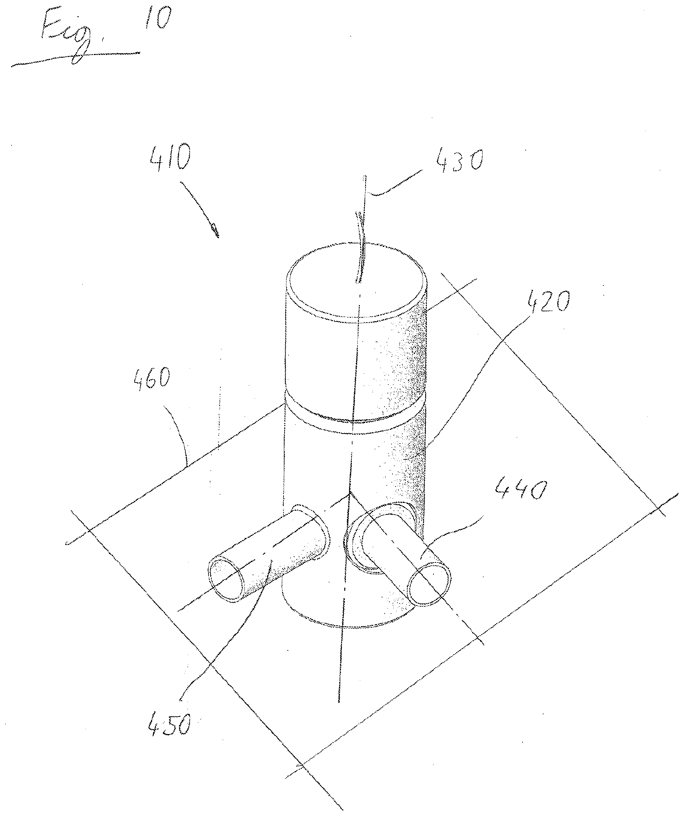

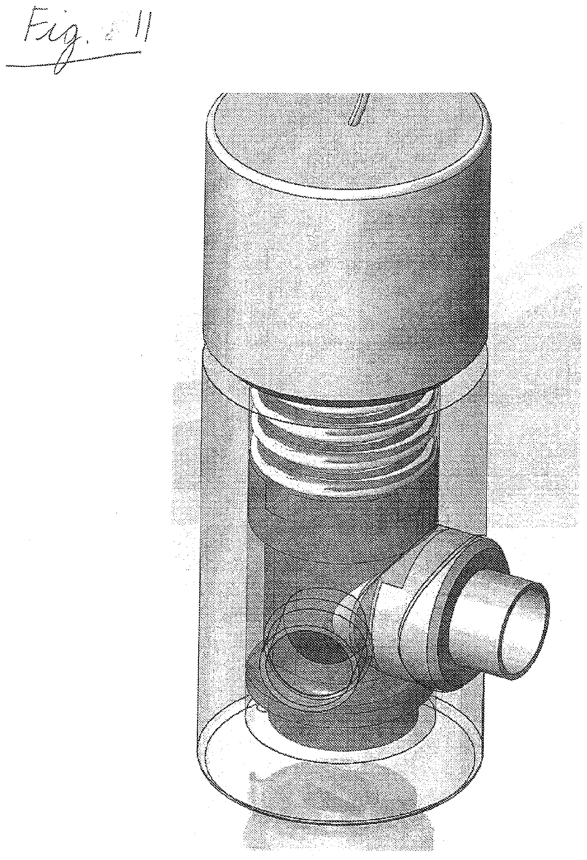

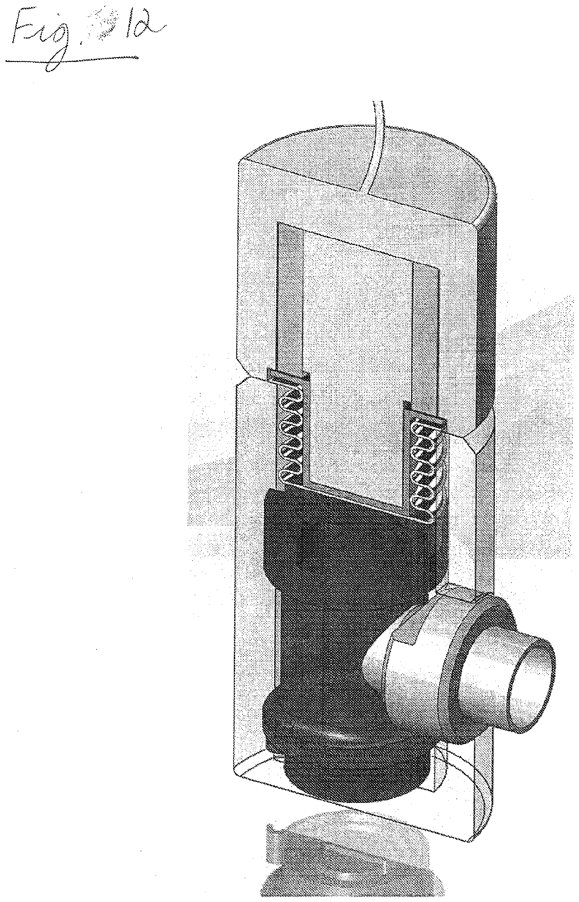

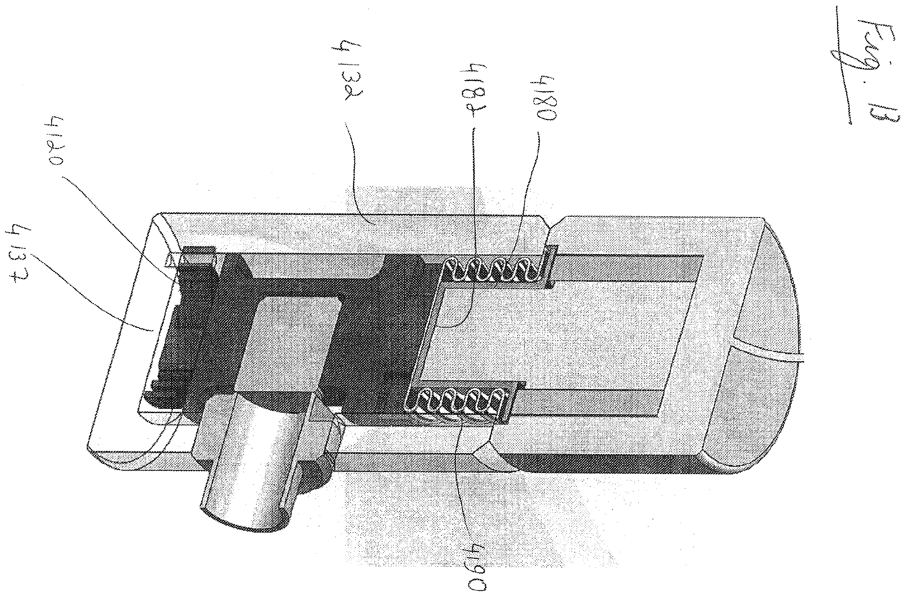

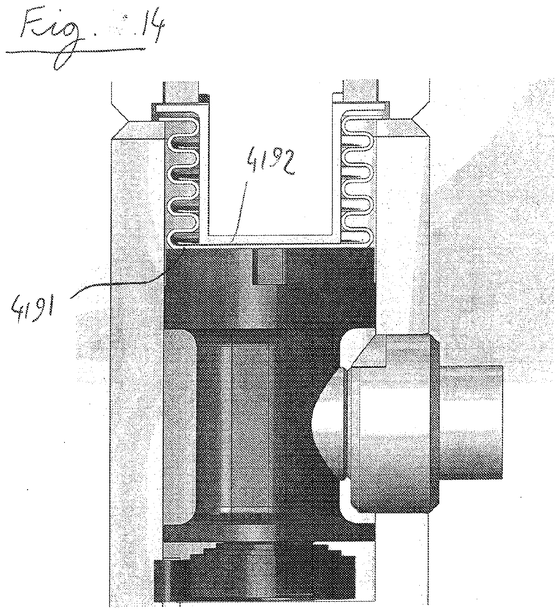

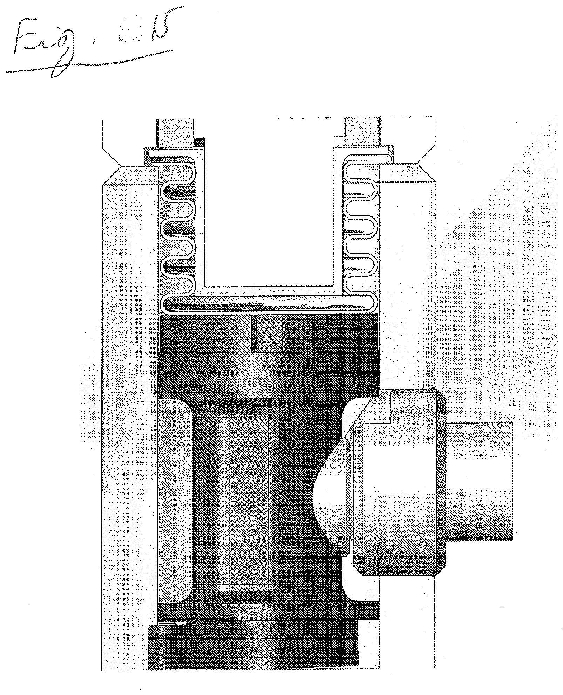

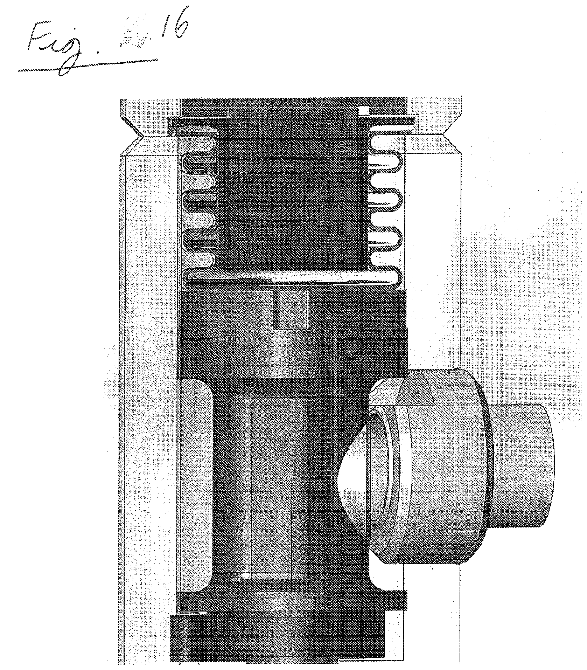

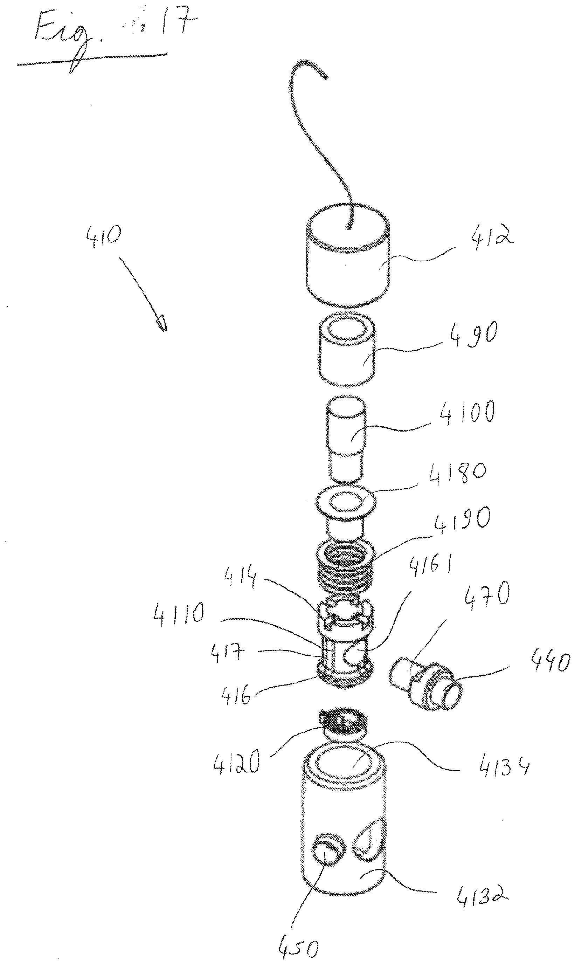

Reference is given to **figures No. 10 to No. 17.** Figure No. 10 constitutes an illustration in perspective of yet an additional example of valve 410 in accordance with the invention - a valve of the normally closed valve type constructed with a mechanism providing for a rather rotational movement for opening the flow passage. Figure No. 11 constitutes an illustration in perspective of valve 410 wherein for the sake of clarification the valve's house assembly is illustrated as if it is transparent. Figure No. 12 constitutes an illustration in perspective, part of it in cross section, of valve 410. Figure No. 13 constitutes a cross section illustration of valve 410 in perspective. Figure No. 14 constitutes a local illustration of a side cross section, of part of valve 410 in the pre actuation condition (flow passage closed). Figure No. 15 constitutes a local illustration of side cross section of part of valve 410 in the condition of "while being actuated" (while being in motion and opening of the flow passage). Figure No. 16 constitutes a local illustration of side cross section of part of valve 410 in the condition of after being actuated (the flow passage is open). Figure No. 17 constitutes an exploded view in perspective that presents the various components of valve 410.

Viewing Fig. No. 10, it is easy to understand that similarly to valves 10, 210 and 310, also in valve 410 there exits the prominent geometric characteristic to which we drew attention above when referring to all those valves - the fact that inlet flow opening 440 to it and outlet flow opening 450 from it, are substantially formed on at least one geometrical plain, in the illustrated example - on a single common plane 460 that extends in its direction wherein it is substantially orthogonal to lengthwise axis 430 of the valve's house assembly 420.

In the illustrated example the inlet and outlet flow openings are positioned as said on a plain that is orthogonal in its direction to the lengthwise axis, but in contra distinction to the case of valves 10, 210 and 310, in valve 410 the openings are positioned in an angular array one related to the other (and not one opposite the other).

Differently then what was described hereinabove regarding valves 10, 210 and 310 while referring (respectively) to figures No. 1 to No. 5, No. 6 to No. 8 and No. 9 - in valve 410 (see Fig. No. 17), the actuating component 4100 is formed as an extended long, full pole and the heating up means 490 is suited to be installed around actuating component 4100 for external heating up (differently than internal of the actuating component).

In valve 410, the valve's house assembly 420 comprises in addition, an upper house component 412 that is suited to be installed on house component 4132 while holding actuating component 4100 ad heating up means 490 within it.

In valve 410, in the actuating assembly 480, hammer component 4110 is formed with two end surfaces (plains) 414 and 416. The two end surfaces (plains) 414 and 416 are connected by a central stem segment 417. From the instant of installing the hammer component in the valve, stem component 417 extends along lengthwise axis 430, and as said - connects the two end surfaces.

Hammer component 4110 is suited for moving inside internal space 4134 of house component 4132. In valve 410, the motion of hammer component 4110 is executed along lengthwise axis 430 as required to sever the link between nipple 470 and inlet flow opening 440 (similarly to the linear movements along lengthwise axis that take place also in valves 10, 210 and 310 that we pointed at before).

However, any professional would understand that in valve 410, differently than in the other valves 10, 210 and 310, the hammer component and in it the nipple that was severed and swept away, do not continue their linear movement along the lengthwise axis of the valve (here - 430), but rather continues with its rotational motion around the lengthwise axis 430, along an angular amplitude as is required for shoving nipple 470 after it was severed.

Any professional would appreciate the fact that in valve 410, shoving the nipple exists in a rotational movement around the lengthwise axis and not along it (as is the case for the quoted valves 10, 210 and 310), shortens the lengthwise dimension of the valve in accordance with the invention, and from it there might be derived advantages in regards to packaging aspects and reduced weight of the valve.

In valve 410, central stem segment 417 together with the two end surfaces 414 and 416 form a ring shaped flow passage 4155 that extends around central stem segment 417. Ring shaped flow passage 4155 is substantially formed on one single plain 460 that from the instant of installing hammer component 4110 in the valve, extends in its direction wherein it is substantially orthogonal to the lengthwise axis 430.

Flow passage 4155 enables passage of the gas or the liquid from the inlet flow opening 440 to the output flow opening 450 following after the shearing off of the link between nipple 470 to inlet flow opening 440 (in a linear movement of the hammer component along the lengthwise axis) and shoving it (in the rotational movement along the angular amplitude of the hammer component around the lengthwise axis).

Central stem segment 417 is formed with bracket opening 4161 for accommodation of nipple 470. Bracket opening 4161 is formed in its direction in a manner that from the instant of assembling the valve, bracket opening 4161 would also be positioned in plain 460 (the common plain of the inlet and outlet flow openings). The bracket opening 4161 is suited to accept in it nipple 470 and to shove it while it is found in it from the instant of shearing off the nipple from inlet flow opening 440.

In valve 410, and this is different than in valves 10, 210 and 310, springy means 4120 is not a helical spring but rather a twisted type of spring (torsion spring) 4120 that leans on the second end 4137 of house component 4132 and anchored there. Twist spring 4120 is suited to adsorb the hammer component 4110 movement along the lengthwise axis 430, and concurrently biases hammer component 4110 to continue and propel nipple 470 as is required for it being shoved in a rotational motion as said, around lengthwise axis 430, and this as is required for it being shoved after it being cut off.

As it would be explained hereinafter, in valve 410, similarly to valves 10, 20 and 310, there exist also the structural characteristic of mechanical demarcation between the gas or the liquid and the actuating component (in the illustrated example component 4100), in all the stages - be it while the flow passage is closed (see figures No. 13 and No. 14), be it in the state of valve actuation (while it is in motion and opening the flow passage), (see figure 15), and be it following after actuating the valve and obtaining an open flow passage (see figure 16).

Actuating assembly 480 in valve 410 comprises passage component 4180. Passage component 4180 is formed in the shape of a cup. Let's refer to figures No. 12 to No. 16. It is clearly seen that passage component 4180 is suited to be installed along lengthwise axis 430 of the valve's house assembly 420. As well, it is possible to learn from the figures that passage component 4180 is formed with a bottom 4182 that on its one side, the inner, is suited for contact with actuating component 4100 for exerting force on hammer component 4110 from the instant of heating up the actuating component.

In addition, actuating assembly 480 in valve 410 comprises demarcation means 4190. Similarly to passage component 4180, demarcation means 4190 is formed too in a cup resembling configuration, but one that its walls are bellows that are liable to extend longer from the instant of heating up the actuating component 4100. Let's return and refer once more to figures No. 12 to No. 16. It can be seen that demarcation means 4190, it too, is suited to be installed along the lengthwise axis 430 of valve's house assembly 420, wherein it contains passage component 4180 in it. From the instant of their assembly, the edge of demarcation means 4190 is anchored to valve's hose component 4132, and the bottom of demarcation means 4190 on its one side (the exterior one) 4191, is suited to contact with hammer component 4110, and on its other side (the internal one) 4192, suited to contact with the external second side of the bottom of passage component 4180.

Hence, any professional would appreciate the fact that at all stages of valve 410 operational life time, demarcation means 4190 separates - as said, between the gas or the liquid and actuating component 4100

The valves examples that were described hereinabove while referring to the accompanying figures, were all of the normally closed type of valves, but any professional would understand that valves in accordance with the invention, can also be of the normally open type. We now present two examples of such valves.

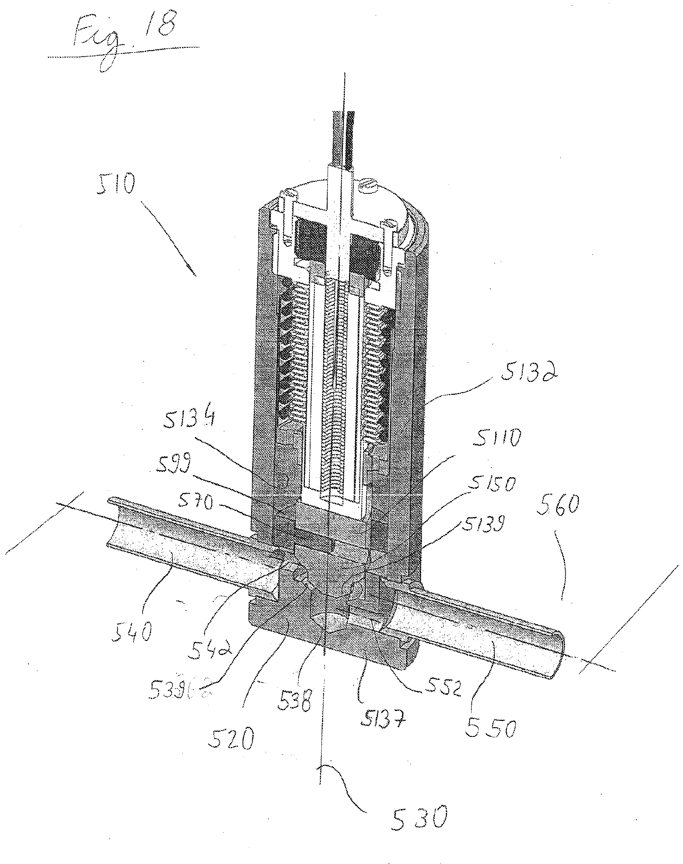

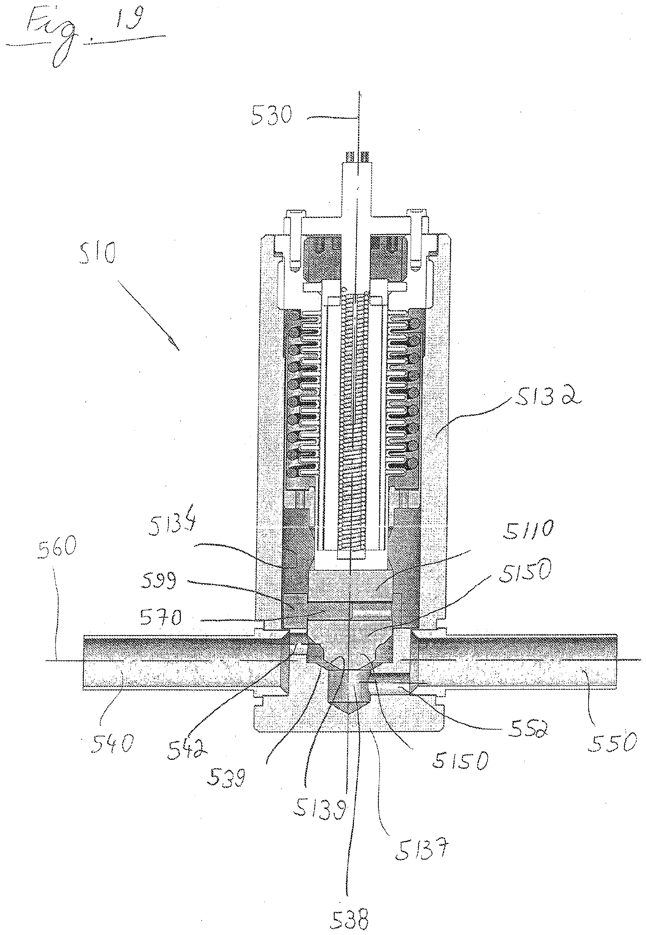

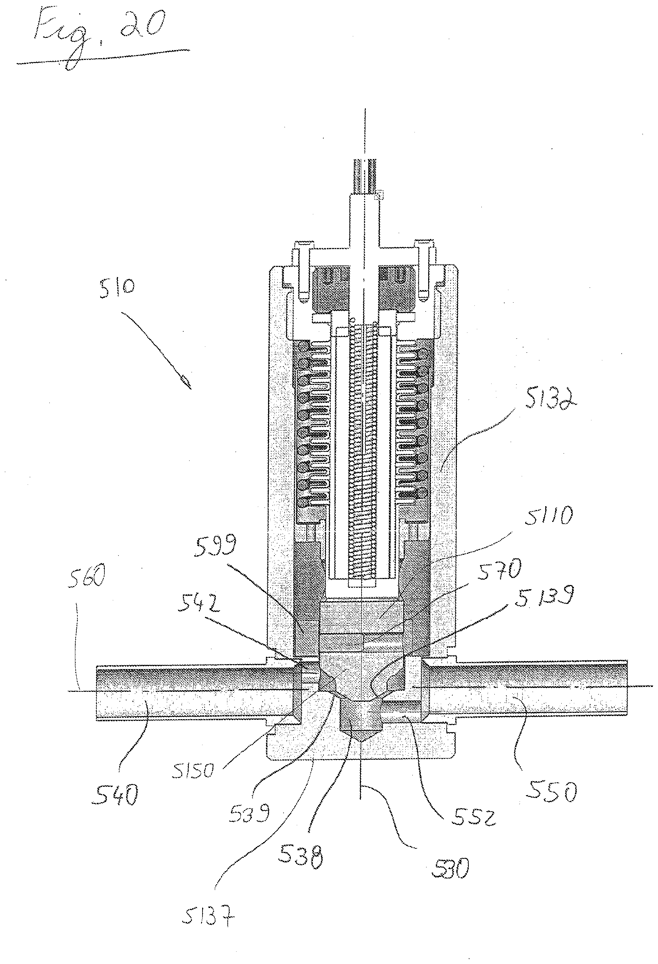

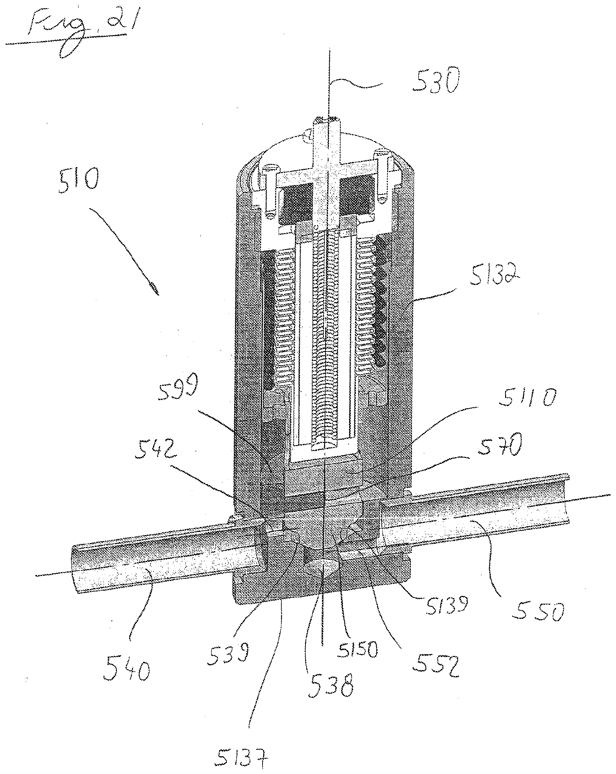

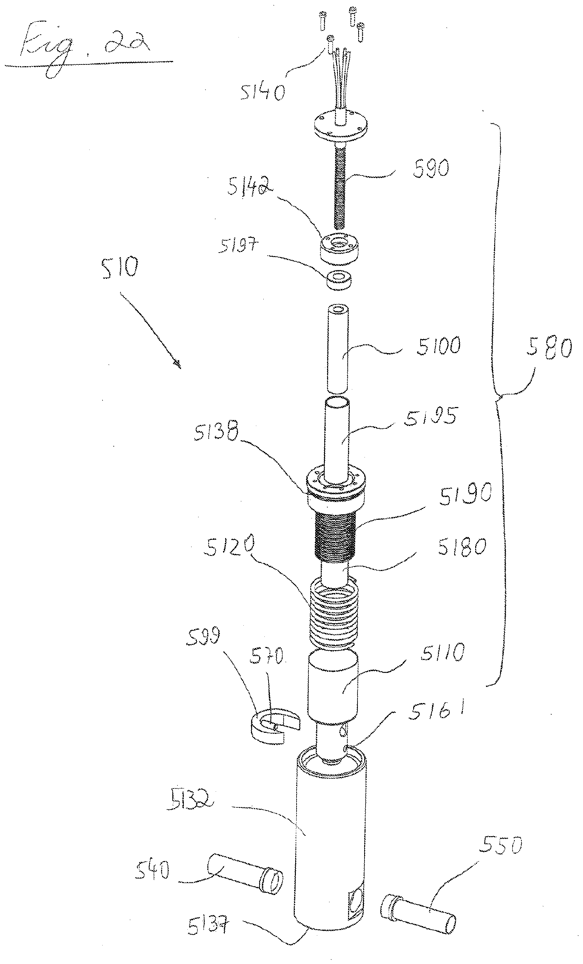

Reference is being made to **figures No. 18 to No. 22.** Figure No. 18 constitutes an illustration of a cross section in perspective, of valve 510 which is an example of a normally open type of valve in accordance with the invention. Figure No. 19 constitutes an illustration of a cross section of valve 510. Valve 510 is depicted there in the state of pre actuation (flow passage open). Figure No. 20 constitutes an illustration of cross section of valve 510 wherein it is illustrated in the condition of while being actuated (while in motion to close the flow passage). Figure No. 21 constitutes an illustration in perspective, of a cross section of valve 510 depicted in the state of after being actuated (flow passage is closed). Figure No. 22 constitutes an exploded view in perspective that presents the various components of valve 510.

From Fig. No. 18 it is easy to understand that similarly to valves 10, 210, 310, and 410, also in valve 510, inlet flow opening 540 and outlet flow opening 550 are substantially formed on one plain 560 that extends on its direction wherein it is substantially orthogonal to the lengthwise axis 530 of the valve house assembly 520. However, differently than valves 10, 210, 310 and 410, valve 510 is of the normally open type of valves and hence while in its regular state, an open flow passage, from inlet flow opening 540 to outlet flow opening 550, does exist. A flow - that as would be described later, is passing through in the valve's house assembly 520 and through passages that are formed in it wherein those passages are found in different levels from plain 560.

In the illustrated example, house component 5132 of valve's house assembly 520 is formed in its closed end 5137 with first passage 542 that is connected to flow passage from inlet flow opening 540 to internal space 538. A second passage 552 that is also formed at its closed end 537 of house component 5132, connects to and enables flow passage from internal space 538 to outlet flow opening 550.

In the illustrated example, passages 542 and 552 are formed wherein they extend in parallel to plain 560 (the inlet and outlet flow openings common plain), one from one side of the plain and the other (second) from its second side. However, any professional would understand that it is feasible to design flow passages also in another geometric configuration (for example - routing the flow from the inlet flow opening through a passage that is not orthogonal in its direction to the lengthwise axis of the valve but rather oblique relative to it in a manner that it leads the flow to the bottom section of the inner space and from there routing the flow to the outlet flow opening through a passage that is orthogonal in its direction to the lengthwise axis of the valve).

As said, valve 510 is of the normally open type and hence from the instant of activating it (see figure No. 21) the flow passage that regularly exists from inlet flow opening 540 to outlet flow opening 550 is cut off. In the illustrated example, between the various levels in which, as said, passages 542 and 552 are formed, internal space 538 is formed with a circumferential shoulder 539 that extends around lengthwise axis 530. Hammer component 5110 is formed with an end 5150 that has a circumferential shoulder 5139. From the instant of propelling hammer component 5110 to a motion inside internal space 5134 of house component 5132 (see figure No. 20), circumferential shoulder 5139 is brought to a sealing contact on circumferential shoulder 539 (see figure 21).
Similarly to the configuration of valve 10 (as it was described above when referring to figures No.1 to No.5), propelling hammer component 5110 is executed by actuating assembly 580 that similarly as said comprises heating up means 590 to excite actuating component 5100, that is made, as said, from material that is SMA (for example - NiTi). Hammer component 5110 is suited to transfer the force that actuates component 5100 would exert from the instant of its heating up, as said. The force transfer is apt to occur alongside lengthwise axis 530, to nipple 570 and would bias the nipple to a shearing strain that would lead to the nipple shearing.

Valve 510 comprises bracket component 599 wherein nipple 570 is usually connected to it. Bracket 599 is suited for positioning in valve's house assembly 520, inside internal space 5134 of house component 5132, wherein it leans on the closed end 5137, of house component 5132. In the illustrated example, bracket 599 is formed as a kind of a horseshoe wherein nipple 570 is formed where it protrudes from its internal section. Nipple 570 is suited to being installed inside bracket opening 5161 that is formed in hammer component 5110. As can be seen in figures No. 19 to No. 21, bracket opening 5161 is suited to receive in it nipple 570 and to shove it and sweep it away while the nipple is found inside it, from the instant of the nipple being sheared off from bracket 599.

Similarly to what is described hereinabove when referring to valve 10, valve 510 comprises also in addition, a springy means 5120 which is suited to cause continued propelling of nipple 570 following after it is sheared off, for shoving it away (see figures 20 and No. 21).

Similarly (see Fig. No. 22), valve 510 also comprises a nut component 5138 that is suited to being affixed at the end of house component 5132, in a manner that heating up means 590 is installed on it by an array of screws 5140.

Also in valve 510 there is obtained a mechanical demarcation (physical partitioning) between the gas or the liquid and the actuating component (in the illustrated example component 5100), in all the stages - be it while an open flow passage is provided (see Fig. No 18 and No. 19) and be it after activating the valve - while closing the flow passage (see Fig. No. 20), and obtaining a condition where the flow passage is closed (Fig. 21). Similarly to what is described above when referring to valve 10, the demarcation is obtained by a first demarcation means 5180 resembling a cup shape and a second demarcation means 5190 in the configuration of a bellows.

Additional components that similarly to valve 10, exist also in valve 510 (see Fig. 22), are insulating component 5195 that helps to insulate the actuating component, plug component 5142 that is suited to connect with nut component 5138, and disc component 5197 that from the instant of being installed in the valve, demarcates between the actuating component to the plug.

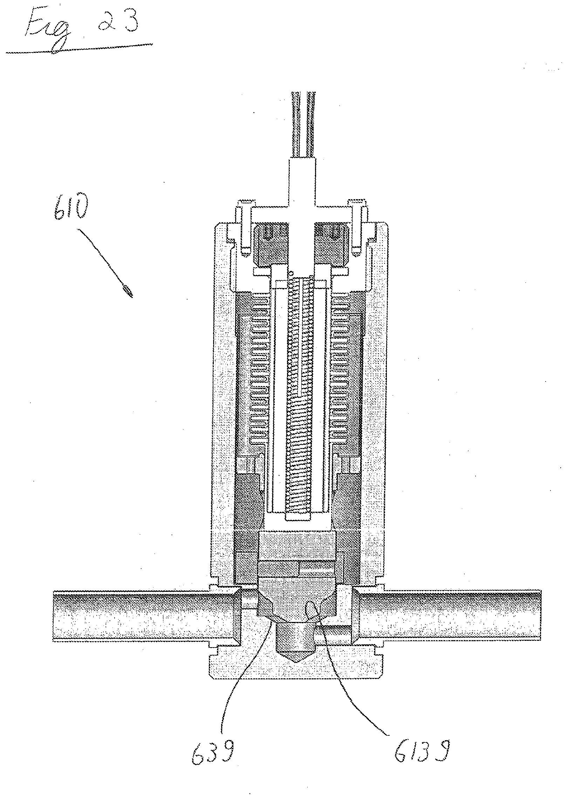

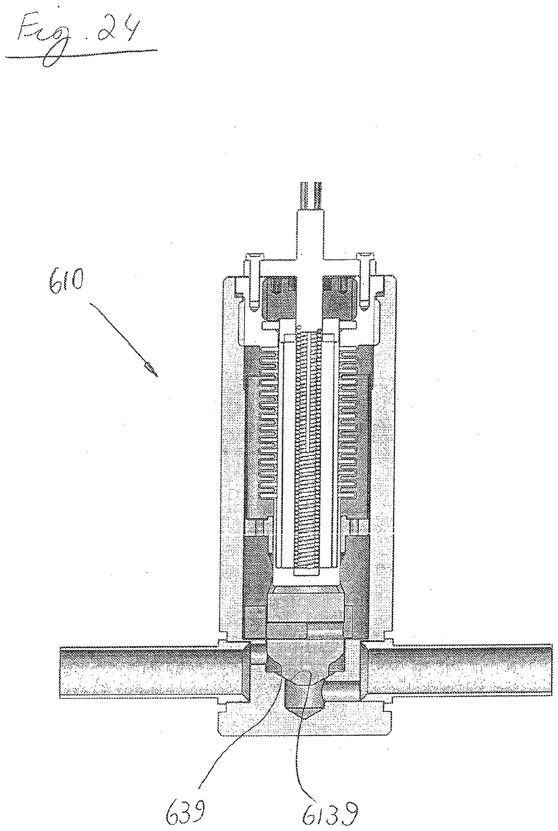

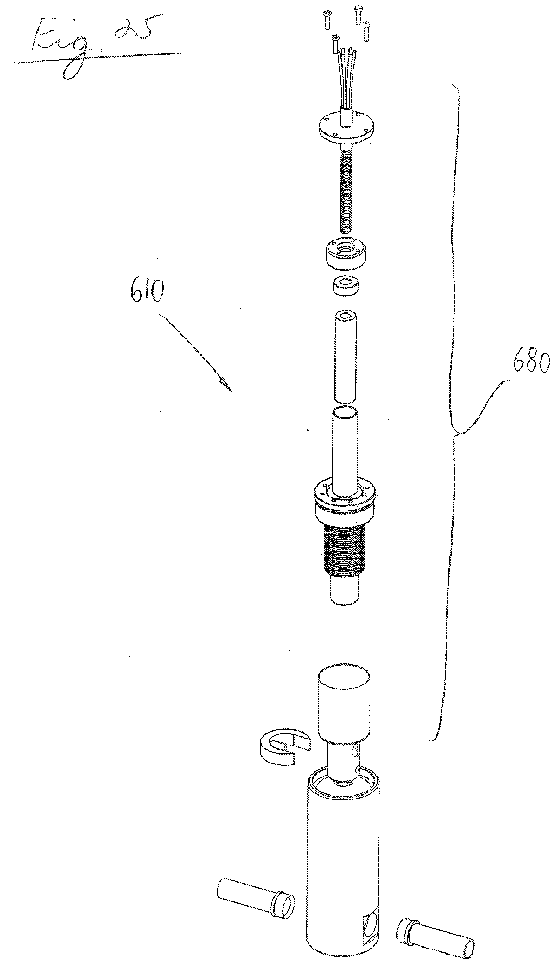

Reference is being made to **Fig. No. 23 to No.25.** Fig. No. 23 constitutes a cross section illustration of an additional example of a valve in accordance with the invention - valve 610, which is of the normally open type, but - as different from valve 510 which was described above when referring to Fig. No. 18 to No. 22, valve 610 does not comprise a springy means. In Fig. No. 23, valve 610 is illustrated in the condition of pre actuation (flow passage open). Fig. No. 24 is a cross section illustration of valve 610 which is illustrated in Fig. No. 23, in the condition of post actuation (flow passage closed). Fig. No. 25 constitutes an exploded view in perspective that presents the various components of valve 610.

As said, valve 610 differs from valve 510 which was described above when referring to 18 to No. 22, but as per the fact of the absence of the springy means (in the example of valve 510 - helical spring 5120). It was found that the performance of actuating component 680, it by itself, is able to ensure a sealing contact between circumferential shoulder 6139 to circumferential shoulder 639 (see Fig. No. 24).

Hence, in view of the descriptions above and the accompanying figures, any professional would appreciate the fact that a valve in accordance with the invention, is an inert valve (devoid of any explosive materials), safe, given to be checked, reliable, and relatively simple in its construction and with relatively low costs. Implementing the invention enables designing a variation of valves, be it from the normally closed type or the normally open type, that are of the wide range of forces and strokes, while suiting to a wide range of operating temperatures (for example -5 - 70°C). In a valve in accordance with the invention there also exists geometric separation and thermal isolation, between the actuating assembly (SMA based with its heating up means) to the flow passage, in a manner that prevents leaks of the flowing (the gas or the liquid) to the actuator, instills an advantage of modularity wherein it enables repeated usage of the actuator, and enables obtaining flow by the valve of problematic liquids from the aspect of chemical compatibility or contact thermal sensitivity (Hydrazine and IRFNA), (and also other liquids and gases such as - de-Ionized Water, Argon, GHe, GN2). The actuator assembly in a valve in accordance with the invention, also is given to repeated checks before being installed in the valve. This and more, a valve in accordance with the invention is given to be produced in relatively small dimensions (for example - length of approximately 50 mm and diameter of approximately 20 mm) and with relatively low weight (for example approximately 140 gram), an aspect that instills comparative advantage in space implementations in which the limitations of dimensions and weight are important,

It is important to note that the above listed references and while referring to the accompanying figures for implementations of the valves in propelling systems of satellites, is only an example and any professional would understand that valves in accordance with the invention are given to implementation also in other places in which there is required a one-time opening, timed and reliable, of a flow passage under sever environmental conditions (for example - applying such valves for pecking and opening flow passage in fire fighting systems).

## Claims

1. A single one time use, SMA based valve (10, 210, 310, 410), that comprises:
a valve house assembly (20) that is formed with a lengthwise axis (30), and with an inlet flow opening (40) for passage of gas or liquid into the valve, and outlet flow opening (50) for passage of the gas or the liquid outwards from the valve (10); and
a nipple component (70) given to shearing and shoving from the instant of its being severed off, in a manner that enables passage of the gas or the liquid from said inlet flow opening (40) to said outlet flow opening (70) wherein the herein defined valve is a valve of the normally closed type; and
an actuating assembly (80) that is suited to be installed inside said valve's house assembly (20) along said lengthwise axis (30), and that comprises
heating up means (90), and
actuating component (100) made of material that is SMA and that is given to heating up by said heating up means (90) in a manner that leads to its extending along the lengthwise axis (30) of said house assembly (20); and
a hammer component (110) that is suited to transfer the force that said actuating component (100) is exerting, from said instant of heating said actuating component (100), along said lengthwise axis (30) to said nipple (70), and to bias said nipple (70) into a strain in order to sever it off; and
said hammer component (110) is suited in addition to continue and propel said nipple (70) for shoving and sweeping it away after it being severed off as said; and
demarcation exists all the time between said gas or liquid to said actuating component (100),
wherein said nipple (70), before being severed off, is connected to said inlet flow opening (40),
**characterized in that** the inlet flow opening (40) and outlet flow opening (50) are formed substantially on at least one plane (60), that extends in its direction wherein it is substantially orthogonal to the lengthwise axis (30) of said house assembly (20), and (100), **characterized in that**
said actuating assembly (80) comprises in addition, a springy means (120) that is suited to cause continued propelling of said nipple (70) following after its being severed off in order to shove said nipple (70) away in a manner that it would not block said passage of said gas or liquid from said inlet flow opening (40) to said outlet flow opening (50).

2. A single one time use, SMA based valve (510, 610), that comprises:
a valve house assembly (520) that is formed with a lengthwise axis (530), and with an inlet flow opening (540) for passage of gas or liquid into the valve, and outlet flow opening (550) for passage of the gas or the liquid outwards from the valve (510); and
a nipple component (570) given to shearing and shoving from the instant of its being severed off, in a manner that enables stopping of said gas or liquid passage from said inlet flow opening (540) to said outlet flow opening (550), wherein the herein defined valve is a valve of the normally open type; and
an actuating assembly (580) that is suited to be installed inside said valve's house assembly (520) along said lengthwise axis (530), and that comprises
heating up means (590), and
actuating component (5100) made of material that is SMA and that is given to heating up by said heating up means (590) in a manner that leads to its extending along the lengthwise axis (530) of said house assembly (520); and
a hammer component (5110) that is suited to transfer the force that said actuating component (5100) is exerting, from said instant of heating said actuating component (100), along said lengthwise axis (530) to said nipple (570), and to bias said nipple (570) into a strain in order to sever it off; and
said hammer component (5110) is suited in addition to continue and propel said nipple (570) for shoving and sweeping it away after it being severed off as said; and
wherein said inlet flow opening (540) and outlet flow opening (550) are formed substantially on at least one plane (560), that extends in its direction wherein it is substantially orthogonal to the lengthwise axis (530) of said house assembly (520), and demarcation exists all the time between said gas or liquid to said actuating component (100),
wherein said valve (510) comprises, in addition, a bracket component (599) that said nipple **characterized in that** (570) is linked to it before being severed off and said bracket (599) is suited to be located in the valve's house assembly (520).

3. The valve (10) in accordance with claim 1, wherein in said actuating assembly (80) said actuating component (100) is formed as an elongated pole with an internal space (102), and said heating up means (90) is suited to be installed inside said internal space (102) for internal heating of said actuating component (100);
preferably wherein said actuating component (100) comprises in addition an insulating component (195) that is suited to be installed on said actuating component (100) and extend along it.

4. The valve (10) in accordance with claim 1, wherein said valve's house assembly (20) comprises a house component (132) which is formed with an internal space (134) that extends along said lengthwise axis (30) wherein it is open on one end of said house component (132).

5. The valve (10) in accordance with claim 4, wherein said valve's house assembly (20) comprises in addition a nut component (138) that is suited to being affixed to said one end of said house component (20), and a plug component (142) that is suited to connect with said nut component (138);
preferably
wherein said actuating assembly (80) comprises in addition
a first demarcation means (180) in a configuration resembling a cup, that is suited to be installed along the lengthwise axis (30) of said valve's house assembly (20), and it is formed with a bottom that on one external side of the bottom is suited to contact with said hammer component (110) until severing the link between said nipple (70) to said inlet flow opening (40), and on the second internal side of said bottom, suited to contact with said actuating component (100) for exerting force on said hammer component (110) as said, from the instant of heating up of said actuating component (100), and
a second demarcation means (190) in a configuration of bellows that is given to increasing its length from the instant of heating up said actuating component (100), and wherein said second demarcation means (190) extends along said lengthwise axis (30) of said valve's house assembly (20), wherein it is anchored on its one end to said nut component (138) and on its second end to said cup resembling first demarcation means (180), and
wherein said first and second demarcation means (180, 190) separate as said, all the time, between the gas and the liquid to said actuating component (100).

6. The valve (10) in accordance with claim 4 wherein in said actuator assembly (80)
said hammer component (110) is formed as a cylinder having terraced space (146) that is open in its one end (148) and closed in the second other end (150), and suited to motion inside said internal space (134) of said house component (132) along said lengthwise axis (30), and
wherein said one end (148) of said component (110) is suited to receive into it said springy means (120) of the actuating assembly (80), and
wherein adjacent to said second closed end (150) of the component (110), a flow plane passage (152) is formed substantially on one (60), that from the instant of assembling
the component (110) in the valve (10), extends in its direction wherein it is substantially orthogonal to the lengthwise axis (30) of said house (20), and wherein said flow passage (152) enables passage of the gas or the liquid from said inlet flow opening (40) to said outlet flow opening (50) following after severing of the link between said nipple (70) to said inlet flow opening (40) and its shoving and sweeping away, and
wherein said second closed end (150) is formed with a bracket opening (161) to the nipple (70) that is formed parallel to said flow passage plain and at a distance from it, and wherein said bracket opening (161) is suited to receive in it said nipple (70) and to shove it wherein it is found in it, from the instant it was severed from said inlet flow opening (40).

7. The valve (10, 210) in accordance with claim 6,
wherein said flow passage (152) is formed as two openings that are located one against the other at the walls of said terraced space (146) of said hammer component (110);
wherein an internal space (102) of said house component (132) is formed with a segment (165) that is suited to receive in it a segment of the closed second end (150) of the component (110), in which said bracket opening (161) for said nipple (70) is formed, from the time of severing the link between said nipple (70) to said inlet flow opening (40) and shoving it while said nipple (70) is inside said bracket opening (161); or
wherein said bracket opening (161) to said nipple (70) at the second closed end (150) of the component (110), is formed in addition with a flow passage means (170) for flowing gas or liquid towards said nipple (70) from the instant of its severing from said inlet flow opening (40), and so shoving it towards the wall of said segment (165) of that internal space (102), in a manner which limits the possibility of said hammer component (110) for motion along said lengthwise axis (30) in the direction that is opposite to the biasing direction by said springy means (120); or
wherein the terrace formed as said in said hammer component (110), is formed with at least one opening on its circumference, in a manner that enables passage of gas or liquid through it from said inlet flow opening (40) into the component's space (146), following after the severing of the link between said nipple (70) to said inlet flow opening (40) and the shoving and sweeping away of said nipple (70); or
wherein said flow passage (152) is formed as a ring like flow passage (2115) around a central stem (217) in said hammer component (2110);
preferably wherein said valve (210) comprises in addition, filter means (215) that is formed as a sleeve and suited to be installed at the internal space of said valve's housing component (20) around said ring like flow passage (2115), for filtering said gas or liquid when it passes from said inlet flow opening (40) to said outlet flow opening (50) following after the severing said link between said nipple (70) to said inlet flow opening (40) and shoving said nipple (70) as said following after severing it.

8. The valve (210) in accordance with claim 1,
wherein said springy means (120) constitutes a helical spring; or
wherein the valve (210) comprises, in addition, filter means (215) that is suited to be installed in the valve's housing assembly (20) and filter the gas or the liquid when it passes from said inlet flow opening (40) to said outlet flow opening (50) following after severing said link between said nipple (70) to said inlet flow opening (40) and shoving said nipple (70) as said, after its being severed; or
wherein said actuating component (100) is formed as an elongated pole, and said heating up means (90) is suited to be installed around said actuating component (100) for external heating up of said actuating component (100).

9. The valve (10) in accordance with claim 5, wherein said springy means (120) is a helical spring that leans on said nut component (138) and biases said hammer component (110), to continue and propel said nipple (70) for shoving it following after its severing (away) as said.

10. The valve (310, 410) in accordance with claim 4,
wherein said valve (310) comprise in addition, an independent stoppage means (310) for maintaining a closed flow passage given an exposure of said valve (310) to high temperature, and wherein said stoppage means (310) is **characterized in that** that said means (310) comprises a second actuating component (3101), that is also made of a material that is SMA, and wherein said second actuating means is located along said house component (3132) of said valve's house assembly (320) and in parallel to its lengthwise axis (330), and wherein its heating up by the temperature that prevails in the vicinity of the valve (310), biasing said house component (3132) to a strain that causes its getting elongated in a degree that prevents severing the link between said nipple (370) to the said inlet flow opening (340), and this even if said first actuating component (3100) got warmed up too, to a temperature that would result in its getting elongated too;
preferably wherein said house component (3132) is formed with shoulders (325, 326) that protrude from its circumference at its two ends, and said second actuating component (3101) is suited to lean on said shoulders (325, 326) for biasing as said, of the house component (3132), into a strain that causes its getting elongated component (412) that is suited to be installed on said house component (4132) while including said actuating component (4100) and said heating up means (490) in it.

11. The valve (410) in accordance with claim 4, wherein in said actuating assembly (480)
said hammer component (4110) is formed with two end surfaces (414, 416) that are linked by a central stem segment (417) that extends along said lengthwise axis (430) and connects between them, and said hammer component (4110) is suited for movement inside said internal space (4134) along said lengthwise axis (430) as required for severing said link between said nipple (470) to said inlet flow opening (440) and with rotational movement around said lengthwise axis (430) as required for shoving said nipple (470) and sweeping it away following after its severing as said, and
wherein said central stem segment (417) together with said two end surfaces (414, 416) form a ring like flow passage (4155) around said central stem segment and the ring like flow passage (4155) is substantially formed on one plain, wherein from the instant of installing said component (4110) in said valve (410) extends in its direction wherein it is substantially orthogonal in its direction to the lengthwise axis (430) of said house (420) and wherein said flow passage (4155) enables passage of the gas or liquid from said inlet flow opening (440) to said outlet flow opening (450) following after severing the link between said nipple (470) to said inlet flow opening (440) and shoving said severed nipple (470) away and
wherein in said central stem segment (417), a bracket opening (4161) to said nipple (470) is formed and wherein said bracket (4161) is formed in its direction so that from the instant of installing the valve (410), it will be in said inlet and outlet flow openings plain, and wherein said nipple's bracket opening (4161) is suited to receive in it said nipple (470) and shovel it wherein it is found inside it from the instant of its severing from said inlet flow opening (440), and
wherein said springy means (4120) is a twist spring that leans on said second end (4137) of house component (4132) and suited to adsorb the motion of said hammer component (4110) along said lengthwise axis (430) and biases said hammer component (4110) to continue and propel said nipple (470) for shoving it in a rotational motion as said around said lengthwise axis (430) following after its severing as said;
preferably wherein said actuating assembly (480) includes in addition a passage component (4180) in a configuration resembling a cup, wherein it is suited for installation along said lengthwise axis (430) of said valve's house assembly (420) and it is formed with a bottom (4182) that from its internal one side is suited for contact with said actuating component (4100) for exerting force, as said, from the instant of heating up said actuating component (4100) on said hammer component (4110), and a demarcation means (4190) also in a configuration resembling a cup whose walls are bellows which is given to extend from the instant of heating up said actuating component (4100), and wherein said demarcation means (4190) is suited also to be installed along said lengthwise axis (430) of said valve's house assembly (420), while it contains said passage component (4180) inside, wherein the edge of said demarcation means (4190) is anchored to the valve's house component (420), and its bottom (4182) from its external one side (4191), is suited for contact with said hammer component (4110), and on its other internal side (4192) it is suited for contact with said second external side of the bottom (4182) of said passage component (4180), and when said demarcation means (4190) does separate as said, all the time between the gas or the liquid to said actuating component (4100).

12. The valve (510) in accordance with claim 2, wherein said house component (5132) of the valve's house assembly (520), is formed at its closed end, with an internal space (5134), and with a first passage (542) which connects to flow passage from said inlet flow opening (540) to said internal space (538), and with a second passage (552) which connects to flow passage from said internal space (538) to said outlet flow opening (550).

13. The valve (510) in accordance with claim 12,
wherein said first and second passages (542, 552) are formed wherein they extend in parallel to said plain (560), one on one side of the plain (560) and the second on its second side;
or
wherein said internal space (538) is formed between said first and second passages (542, 552), with a circumferential shoulder (539) that extends around said lengthwise axis (530), and said hammer component (5110) is formed with a circumferential shoulder (5139) that from the instant of propelling the hammer component (5110) to a motion in said valve's house assembly (520), said shoulder (5139) is suited to sealing contact with said circumferential shoulder (539) of said internal space (538);
or
wherein in said actuator assembly (580) said actuator component is formed as an elongated pole with an internal space, and said heating up means (590) is suited to be installed inside said internal space (5134) for internal heating up of said actuator component (5100);
or
said actuating assembly (580) comprises in addition an insulating component (5195) which is suited to be installed on said actuating component (5100) and to extend alongside it.

14. The valve (510) in accordance with claim 12, wherein said valve's house assembly (520) comprises a house component (5132) which is formed with an internal space (5134) that extends along said lengthwise axis (530) wherein it is open at one end of said house component (5132);
preferably wherein said valve's house assembly (520) comprises in addition a nut component (5138) which is suited to be affixed to said one end of said house component (5132), and a component which is suited to connect with said nut component (5138);
more preferably wherein said actuating assembly (580) comprises in addition a first demarcation means (5180) in a configuration resembling a cup which is suited to be installed along said lengthwise axis (530) of said valve's house assembly (520), and wherein said first demarcation means (5180) is formed with a bottom that, on the one external side of said bottom, is suited to contact with said hammer component (5110) until the severing of the link between said nipple (570) to said bracket (599), and on the second internal side of said bottom is suited to contact with said actuating component (5100) for exerting force, as said, from the instant of heating up said actuating component (5100), on said hammer component (5110), and a second demarcation means (5190) in a configuration of a bellows that is given to being elongated from the instant of heating up said actuating component (5100), that extends along said lengthwise axis (530) of said valve's house assembly (520), wherein it is anchored on its one end to said nut component (5138) and on its second end to said cup resembling first demarcation means (5180), and wherein said first and second demarcation means (5180, 5190) separate as said, all the time, between said gas or liquid to said actuating component (5100).

15. The valve (510) in accordance with claim 12, wherein said valve (510) comprises in addition, a springy means (5120) which is suited to cause continued propelling of said nipple (570) following after its severing, in order to shovel it;
preferably
wherein said springy means (5120) is a helical spring, preferably wherein said springy means (5120) is a helical spring which leans on said nut component (5138) and biases said hammer component (5110) to continue and propel said nipple (570), for shoving it after it was severed as said;
or
wherein in said actuating assembly (580)
said hammer component (5110) is formed as a cylinder with an internal terraced space which is open on its one end and closed at the second end, and suited for motion inside said internal space of said house component (520) along said lengthwise axis (530), and
wherein said one end of said component (5110) is suited to receive into it said springy means (5120) of the actuating assembly (580), and
wherein adjacent to its said closed second end of said component (5110), a bracket opening (5161) is formed to said nipple (570) wherein it is formed in parallel to said flow passage plain and at a distance from it, and wherein said bracket opening (5161) is suited to receive into it said nipple (570) and shove it wherein it is found inside it, from the instant of severing it from said bracket component (5161).

## Patentansprüche

1. Auf SMA basierendes Ventil (10, 210, 310, 410) zur einmaligen Verwendung, welches umfasst:
einen Ventilgehäuse-Aufbau (20), der mit einer Längsachse (30) und mit einer Einlassöffnung (40) zum Durchlassen von Gas oder Flüssigkeit in das Ventil, und einer Auslassöffnung (50) zum Durchlassen des Gases oder der Flüssigkeit aus dem Ventil (10) ausgebildet ist; und
eine Nippel-Komponente (70), die von dem Moment, zu dem diese abgetrennt wird, einem Scheren und Schieben ausgesetzt ist, das Durchlassen des Gases oder der Flüssigkeit aus der Einlassöffnung (40) zu der Auslassöffnung (50) ermöglicht, worin das hier definierte Ventil ein Ventil des normal geschlossenen Typs ist; und
einen Betätigungs-Aufbau (80), der angepasst ist, in dem Ventilgehäuse-Aufbau (20) entlang der Längsachse (30) eingerichtet zu werden, und der umfasst,
Erwärmungsmittel (90), und
eine Betätigungs-Komponente (100), die aus einem SMA-Material gefertigt ist und die zum Erwärmen durch die Erwärmungsmittel (90) in einer Weise bereitgestellt ist, die zu deren Erstreckung entlang der Längsachse (30) des Gehäuse-Aufbaus (20) führt; und
eine Hammer-Komponente (110), die angepasst ist, die Kraft zu übertragen, die die Betätigungs-Komponente (100) von dem Moment des Erwärmens der Betätigungs-Komponente (100) entlang der Längsachse (30) zu dem Nippel (70) ausübt, und den Nippel (70) mit einer Spannung vorzuspannen, um diesen abzutrennen; und
worin die Hammer-Komponente (110) weiter angepasst ist, fortzufahren und den Nippel (70) vorzutreiben, um diesen weg zu schieben und zu treiben, nachdem dieser wie beschrieben abgetrennt wurde; und
worin zu jeder Zeit eine Trennung zwischen dem Gas oder der Flüssigkeit und der Betätigungs-Komponente (100) vorliegt, wobei der Nippel (70), bevor dieser abgetrennt
wird, mit der Einlassöffnung (40) verbunden wird,
**dadurch gekennzeichnet, dass**
die Einlassöffnung (40) und die Auslassöffnung (50) im Wesentlichen auf mindestens einer Ebene (60) ausgebildet sind, die sich in deren Richtung erstreckt, worin diese im Wesentlichen rechtwinklig zu der Längsachse (30) des Gehäuse-Aufbaus (20) ist, und
der Betätigungs-Aufbau (80) darüber hinaus, ein federndes Mittel (120) umfasst, das angepasst ist, andauerndes Vortreiben des Nippels (70) zu bewirken, nachdem dieser abgetrennt wurde, um den Nippel (70) in einer Weise weg zu schieben, dass dieser das Durchlassen des Gases oder der Flüssigkeit von der Einlassöffnung (40) zu der Auslassöffnung (50) blockiert.

2. Auf SMA basierendes Ventil (510, 610) zur einmaligen Verwendung, welches umfasst:
einen Ventilgehäuse-Aufbau (520), der mit einer Längsachse (530) und mit einer Einlassöffnung (540) zum Durchlassen von Gas oder Flüssigkeit in das Ventil, und einer Auslassöffnung (550) zum Durchlassen des Gases oder der Flüssigkeit aus dem Ventil (510) ausgebildet ist; und
eine Nippel-Komponente (570), die von dem Moment, wenn diese abgetrennt wird, einem Scheren und Schieben ausgesetzt ist, das Durchlassen des Gases oder der Flüssigkeit aus der Einlassöffnung (540) zu der Auslassöffnung (550) ermöglicht, worin das hier definierte Ventil ein Ventil des normal geschlossenen Typs ist; und
einen Betätigungs-Aufbau (580), der angepasst ist, in dem Ventilgehäuse-Aufbau (520) entlang der Längsachse (530) eingerichtet zu werden, und der umfasst,
der Erwärmungsmittel (590) und
eine Betätigungs-Komponente (5100), die aus einem SMA-Material gefertigt ist und die zum Erwärmen durch die Erwärmungsmittel (590) in einer Weise bereitgestellt ist, die zu deren Erstreckung entlang der Längsachse (530) des Gehäuse-Aufbaus (520) führt; und
eine Hammer-Komponente (5110), die angepasst ist, die Kraft zu übertragen, die die Betätigungs-Komponente (5100) von dem Moment des Erwärmens der Betätigungs-Komponente (5100) entlang der Längsachse (530) zu dem Nippel (570) ausübt, und den Nippel (570) mit einer Spannung vorzuspannen, um diesen abzutrennen; und
worin die Hammer-Komponente (5110) weiter angepasst ist, fortzufahren und den Nippel (570) vorzutreiben, um diesen weg zu schieben und zu treiben, nachdem dieser wie beschrieben abgetrennt wurde; und
worin die Einlassöffnung (540) und die Auslassöffnung (550) im Wesentlichen auf mindestens einer Ebene (560) ausgebildet sind, die sich in deren Richtung erstreckt, worin diese im Wesentlichen rechtwinklig zu der Längsachse (530) des Gehäuse-Aufbaus (520) ist, und
worin zu jeder Zeit zwischen dem Gas oder Flüssigkeit und der Betätigungs-Komponente (100) eine Trennung vorliegt,
worin das Ventil (510) darüber hinaus eine Klammer-Komponente (599) umfasst, mit der der Nippel (570) verbunden ist, bevor dieser abgetrennt wird, und worin die Klammer (599) angepasst ist, in dem Ventilgehäuse-Aufbau (520) angeordnet zu sein.

3. Ventil (10) nach Anspruch 1, worin in dem Betätigungs-Aufbau (80) die Betätigungs-Komponente (100) als ein länglicher Stab mit einem inneren Raum (102) ausgebildet ist, und das Erwärmungsmittel (90) angepasst ist, in dem inneren Raum (102) eingerichtet zu sein, um die Betätigungs-Komponente (100) von innen aufzuwärmen;
vorzugsweise worin die Betätigungs-Komponente (100) darüber hinaus eine Isolations-Komponente (195) umfasst, die angepasst ist, auf der Betätigungs-Komponente (100) eingerichtet zu sein und sich entlang dieser zu erstrecken.

4. Ventil (10) nach Anspruch 1, worin der Ventilgehäuse-Aufbau (20) eine Gehäuse-Komponente (132) umfasst, die mit einem inneren Raum (134) ausgebildet ist, der sich entlang der Längsachse (30) erstreckt, worin dieser an einem Ende der Gehäuse-Komponente (132) offen ist.

5. Ventil (10) nach Anspruch 4, worin der Ventilgehäuse-Aufbau (20) darüber hinaus umfasst, eine Mutter-Komponente (138), die angepasst ist, an dem einen Ende der Gehäuse-Komponente (20) befestigt zu sein, und eine Anschluss-Komponente (142), die angepasst ist mit der Mutter-Komponente (138) verbunden zu werden;
vorzugsweise
worin der Betätigungs-Aufbau (80) darüber hinaus umfasst:
ein erstes Trennmittel (180) in einem tassenähnlichen Aufbau, der angepasst ist, entlang der Längsachse (30) des Ventilgehäuse-Aufbaus (20) eingerichtet zu sein, und mit einem Boden ausgebildet ist, der an einer äußeren Seite des Bodens angepasst ist, um mit der Hammer-Komponente (110) in Kontakt zu kommen, bis die Verbindung zwischen dem Nippel (70) und der Einlassöffnung (40) getrennt wird, und auf der zweiten inneren Seite des Bodens angepasst ist, mit der Betätigungs-Komponente (100) in Kontakt zu kommen, um von dem Moment des Erwärmens der Betätigungs-Komponente (100) Kraft auf die Hammer-Komponente (110) wie beschrieben auszuüben, und
ein zweites Trennmittel (190) in einem Balg-Aufbau, das seine Länge von dem Moment des Erwärmens der Betätigungs-Komponente (100) verlängert, und worin sich das zweite Trennmittel (190) entlang der Längsachse (30) des Ventilgehäuse-Aufbaus (20) erstreckt, worin es an seinem einen Ende an der Mutter-Komponente (138) und an seinem zweiten Ende an dem tassenähnlichen ersten Trennmittel (180) verankert ist, und
worin das erste und zweite Trennmittel (180, 190), wie beschrieben, zu jeder Zeit zwischen dem Gas und der Flüssigkeit und der Betätigungs-Komponente (100) trennt.

6. Ventil (10) nach Anspruch 4, worin in dem Betätigungs-Aufbau (80)
die Hammer-Komponente (110) als ein Zylinder mit einem terrassiertem Raum (146) ausgebildet ist, der an seinem einen Ende (148) offen und an dem zweiten anderen Ende (150) geschlossen ist, und worin diese angepasst ist, sich in dem inneren Raum (134) der Gehäuse-Komponente (132) entlang der Längsachse (30) zu bewegen, und
worin das eine Ende (148) der Komponente (110) angepasst ist, das federnde Mittel (120) des Betätigungs-Aufbaus (80) darin aufzunehmen, und
worin benachbart zu dem zweiten geschlossenen Ende (150) der Komponente (110), eine Durchflussleitung (152) im Wesentlichen auf einer Ebene (60) ausgebildet ist, die sich von dem Moment des Montierens der Komponente (110) in das Ventil (10) in dessen Richtung erstreckt, worin diese im Wesentlichen senkrecht zu der Längsachse (30) des Gehäuses (20) ist, und worin die Durchflussleitung (152) ein Durchlassen des Gases oder der Flüssigkeit von der Einlassöffnung (40) zu der Auslassöffnung (50) ermöglicht, nachdem die Verbindung zwischen dem Nippel (70) und der Einlassöffnung (40) getrennt wurde und dieser weg geschoben und getrieben wurde, und
worin das zweite geschlossene Ende (150) mit einer Klammer-Öffnung (161) zu dem Nippel (70) ausgebildet ist, die parallel zu der Durchflussleitung-Ebene und davon entfernt ausgebildet ist, und worin die Klammer-Öffnung (161) angepasst ist, den Nippel (70) darin aufzunehmen und diesen zu schieben, und worin sich dieser von dem Moment darin befindet, zu dem dieser von der Einlassöffnung (40) getrennt wurde.

7. Ventil (10, 210) nach Anspruch 6,
worin die Durchflussleitung (152) als zwei Öffnungen ausgebildet ist, die jeweils gegenüberliegend an den Wänden des terrassierten Raumes (146) der Hammer-Komponente (110) angeordnet sind; oder
worin ein innerer Raum (102) der Gehäuse-Komponente (132) mit einem Segment (165) ausgebildet ist, das angepasst ist, ein Segment des geschlossenen zweiten Endes (150) der Komponente (110) darin aufzunehmen, worin die Klammer-Öffnung (161) für den Nippel (70) ausgebildet ist, von dem Zeitpunkt, zu dem die Verbindung zwischen dem Nippel (70) und der Einlassöffnung (40) getrennt ist und dieser geschoben wird, währen der Nippel (70) in der Klammer-Öffnung (161) ist; oder
worin die Klammer-Öffnung (161) zu dem Nippel (70) an dem zweiten geschlossenen Ende (150) der Komponente (110) weiter mit einem Durchflusspassage-Mittel (170) ausgebildet ist, damit Gas oder Flüssigkeit von dem Moment zu dem Nippel (70) fließt, zu dem dieser von der Einlassöffnung (40) getrennt wurde, und dieser so zu der Wand des Segmentes (165) des inneren Raumes (102) geschoben wird, in einer Weise die die Möglichkeit der Hammer-Komponente (110) zur Bewegung entlang der Längsachse (30) in die Richtung beschränkt, die der Vorspannungsrichtung durch die federnden Mittel (120) abgewandt ist; oder
worin die wie beschrieben in der Hammer-Komponente (110) ausgebildete Terrassierung, mit mindestens einer Öffnung auf ihrem Umfang in einer Weise ausgebildet ist, die ein Durchlassen von Gas oder Flüssigkeit durch diese von der Einlassöffnung (40) in den Komponentenraum (146) ermöglicht, nachdem die Verbindung zwischen dem Nippel (70) und der Einlassöffnung (40) getrennt wurde und der Nippel (70) weg geschoben und getrieben wurde; oder
worin die Durchflusspassage (152) als eine ringähnliche Durchflusspassage (2115) um einen zentralen Stamm (217) in der Hammer-Komponente (2110) ausgebildet ist;
vorzugsweise worin das Ventil (210) darüber hinaus ein Filter-Mittel (215) umfasst, das als eine Hülse ausgebildet und angepasst ist, in dem inneren Raum der Ventilgehäuse-Komponente (20) um die ringähnliche Durchflusspassage (2115) eingerichtet zu sein, um das Gas oder die Flüssigkeit zu filtern, wenn dies von der Einlassöffnung (40) zu der Auslassöffnung (50) fließt, nachdem die Verbindung zwischen dem Nippel (70) und der Einlassöffnung (40) getrennt und der Nippel (70) wie beschrieben nach dem Trennen geschoben wurde.

8. Ventil (210) nach Anspruch 1,
worin das federnde Mittel (120) eine Schraubenfeder bildet; oder
worin das Ventil (210) darüber hinaus, ein Filter-Mittel (215) umfasst, das angepasst ist, in dem Ventilgehäuse-Aufbau (20) eingerichtet zu sein und das Gas oder die Flüssigkeit zu filtern, wenn dies von der Einlassöffnung (40) zu der Auslassöffnung (50) strömt, nachdem die Verbindung zwischen dem Nippel (70) und der Einlassöffnung (40) getrennt wurde und der Nippel (70) wie beschrieben nach dem Trennen geschoben wurde; oder
worin die Betätigungs-Komponente (100) als ein länglicher Stab ausgebildet ist, und das Erwärmungsmittel (90) angepasst ist, um die Betätigungs-Komponente (100) herum eingerichtet zu sein, um die Betätigungs-Komponente (100) von außen zu erwärmen.

9. Ventil (10) nach Anspruch 5, worin das federnde Mittel (120) eine Schraubenfeder ist, die sich gegen die Mutter-Komponente (138) stützt und die Hammer-Komponente (110) vorspannt, um den Nippel (70) fortzufahren und anzutreiben, damit dieser nach dem Trennen wie beschrieben weg geschoben wird.

10. Ventil (310, 410) nach Anspruch 4,
worin das Ventil (310) darüber hinaus ein unabhängiges Stopp-Mittel (310) umfasst, um eine geschlossene Durchflussleitung bei einer Exposition des Ventils (310) an hoher Temperatur zu erhalten, und worin das Stopp-Mittel (310) **dadurch gekennzeichnet ist, dass** das Mittel (310) eine zweite Betätigungs-Komponente (3101) umfasst, die ebenso aus einem SMA-Material gefertigt ist, und worin das zweite Betätigungs-Mittel entlang der Gehäuse-Komponente (3132) des Ventilgehäuse-Aufbaus (320) und parallel zu seiner Längsachse (330) angeordnet ist, und worin deren Erwärmung durch die Temperatur, die in der Umgebung des Ventils (310) herrscht, die Gehäuse-Komponente (3132) mit einer Spannung vorspannt, damit diese in einem Grad verlängert wird, der ein Trennen der Verbindung zwischen dem Nippel (370) und der Einlassöffnung (340) verhindert, und dies sogar dann, wenn die erste Betätigungs-Komponente (3100) auch auf eine Temperatur erwärmt wurde, die ebenfalls zu deren Verlängerung führt;
vorzugsweise worin die Gehäuse-Komponente (3132) mit Schultern (325, 326) ausgebildet ist, die von deren Umfang an ihren zwei Enden vorstehen, und die zweite Betätigungs-Komponente (3101) angepasst ist, sich auf die Schultern (325, 326) zu stützen, damit die Gehäuse-Komponente (3132) wie beschrieben mit einer Spannung vorgespannt wird, die bewirkt, dass die Gehäuse-Komponente (3132) wie beschrieben verlängert wird;
oder
worin der Ventilgehäuse-Aufbau (420) darüber hinaus eine obere Gehäuse-Komponente (412) umfasst, die angepasst ist, auf der Gehäuse-Komponente (4132) eingerichtet zu sein, während die Betätigungs-Komponente (4100) und das Erwärmungsmittel (490) darin eingeschlossen sind.

11. Ventil (410) nach Anspruch 4, worin in dem Betätigungs-Aufbau (480)
die Hammer-Komponente (4110) mit zwei Endoberflächen (414, 416) ausgebildet ist, die durch ein zentrales Stammsegment (417) verbunden sind, das sich entlang der Längsachse (430) erstreckt und diese verbindet, und worin die Hammer-Komponente (4110) angepasst ist, um sich in dem inneren Raum (4134) entlang der Längsachse (430), wie zum Trennen der Verbindung zwischen dem Nippel (470) und der Einlassöffnung (440) erforderlich, zu bewegen, und sich um die Längsachse (430) zu drehen, wie zum Schieben und zum Wegtreiben des Nippels (470) erforderlich, nachdem dieser wie beschrieben getrennt wurde, und
worin das zentrale Stammsegment (417) zusammen mit den zwei Endoberflächen (414, 416) eine ringähnliche Durchflussleitung (4155) um das zentrale Stammsegment ausbildet und die ringähnliche Durchflussleitung (4155) im Wesentlichen auf einer Ebene ausgebildet wird, worin sich die ringähnliche Durchflussleitung (4155) von dem Moment des Einrichtens der Komponente (4110) in das Ventil (410) in dessen Richtung erstreckt, worin diese im Wesentlichen rechtwinklig in deren Richtung zu der Längsachse (430) des Gehäuses (420) ist und worin die Durchflussleitung (4155) ein Durchlassen des Gases oder der Flüssigkeit aus der Einlassöffnung (440) zu der Auslassöffnung (450) ermöglicht, nachdem die Verbindung zwischen dem Nippel (470) und der Einlassöffnung (440) getrennt wurde und der getrennte Nippel (470) weggeschoben wurde, und
worin in dem zentralen Stammsegment (417), eine Klammer-Öffnung (4161) zu dem Nippel (470) ausgebildet ist und worin die Klammer (4161) in dessen Richtung ausgebildet ist, so dass von dem Moment des Einrichtens des Ventils (410), diese in der Einlass- und Auslassöffnungs-Ebene ist, und worin die Klammer-Öffnung (4161) des Nippels angepasst ist, den Nippel (470) darin aufzunehmen und diesen zu schieben, wobei sich dieser von dem Moment des Trennens von der Einlassöffnung (440) darin befindet, und
worin das federnde Mittel (4120) eine Spiralfeder ist, die sich auf das zweite Ende (4137) der Gehäuse-Komponente (4132) stützt und angepasst ist, die Bewegung der Hammer-Komponente (4110) entlang der Längsachse (430) zu absorbieren und die Hammer-Komponente (4110) vorspannt, fortzufahren und den Nippel (470) vorzutreiben, um diesen in einer Drehbewegung wie beschrieben um die Längsachse (430) weg zu schieben, nachdem dieser wie beschrieben abgetrennt wurde;
vorzugsweise worin der Betätigungs-Aufbau (480) darüber hinaus eine Durchlass-Komponente (4180) in einem tassenähnlichen Aufbau umfasst, worin dieser angepasst ist, entlang der Längsachse (430) des Ventilgehäuse-Aufbaus (420) eingerichtet zu sein und worin dieser mit einem Boden (4182) ausgebildet ist, der von seiner inneren einen Seite angepasst ist, um wie beschrieben von dem Moment des Erwärmens der Betätigungs-Komponente (4100) auf der Hammer-Komponente (4110) zum Ausüben einer Kraft mit der Betätigungs-Komponente (4100) in Kontakt zu kommen, und ein Trennmittel (4190) ebenso in einem tassenähnlichen Aufbau umfasst, dessen Wände Bälge sind, die sich von dem Moment des Erwärmens der Betätigungs-Komponente (4100) ausdehnen, und worin das Trennmittel (4190) angepasst ist, ebenso entlang der Längsachse (430) des Ventilgehäuse-Aufbaus (420) eingerichtet zu sein, während es die Durchlass-Komponente (4180) innen enthält, worin der Rand des Trennmittels (4190) an der Ventilgehäuse-Komponente (420) verankert ist, und dessen Boden (4182) von seiner äußeren einen Seite (4191) angepasst ist, um mit der Hammer-Komponente (4110) in Kontakt zu kommen, und auf seiner anderen inneren Seite (4192) angepasst ist, mit der zweiten äußeren Seite des Bodens (4182) der Durchlass-Komponente (4180) in Kontakt zu kommen, und wenn das Trennmittel (4190) wie beschrieben, zu jeder Zeit zwischen dem Gas oder der Flüssigkeit und der Betätigungs-Komponente (4100) trennt.

12. Ventil (510) nach Anspruch 2, worin die Gehäuse-Komponente (5132) des Ventilgehäuse-Aufbaus (520) an ihrem geschlossenem Ende mit einem inneren Raum (5134) und mit einem ersten Durchlass (542) ausgebildet ist, der mit der Durchflussleitung von der Einlassöffnung (540) zu dem inneren Raum (538) verbunden ist, und mit einem zweiten Durchlass (552), der mit der Durchflussleitung von dem inneren Raum (538) und der Auslassöffnung (550) verbunden ist.

13. Ventil (510) nach Anspruch 12,
worin der erste und zweite Durchgang (542, 552) derart ausgebildet sind, dass sich diese parallel zu der Ebene (560) erstrecken, einer auf einer Seite der Ebene (560) und der zweite auf deren zweiten Seite;
oder
worin der innere Raum (538) zwischen dem ersten und zweiten Durchgang (542, 552) mit einer Umfangsschulter (539) ausgebildet ist, die sich um die Längsachse (530) erstreckt, und die Hammer-Komponente (5110) mit einer Umfangsschulter (5139) ausgebildet ist, worin von dem Moment des Vortreibens der Hammer-Komponente (5110) zu einer Bewegung in dem Ventilgehäuse-Aufbau (520), die Schulter (5139) angepasst ist, mit der Umfangsschulter (539) des inneren Raumes (538) abdichtend in Kontakt zu kommen;
oder
worin in dem Betätigungs-Aufbau (580) die Betätigungs-Komponente als ein länglicher Stab mit einem inneren Raum ausgebildet ist, und worin das Erwärmungsmittel (590) angepasst ist, in dem inneren Raum (5134) eingerichtet zu sein, um die Betätigungs-Komponente (5100) von innen aufzuwärmen;
oder
worin der Betätigungs-Aufbau (580) darüber hinaus eine Isolations-Komponente (5195) umfasst, die angepasst ist, auf der Betätigungs-Komponente (5100) eingerichtet zu sein und sich entlang dieser zu erstrecken.

14. Ventil (510) nach Anspruch 12, worin der Ventilgehäuse-Aufbau (520) eine Gehäuse-Komponente (5132) umfasst, die mit einem inneren Raum (5134) ausgebildet ist, der sich entlang der Längsachse (530) erstreckt, worin dieser an einem Ende der Gehäuse-Komponente (5132) offen ist;
vorzugsweise worin der Ventilgehäuse-Aufbau (520) darüber hinaus umfasst, eine Mutter-Komponente (5138), die angepasst ist, an dem einen Ende der Gehäuse-Komponente (5132) befestigt zu sein, und eine Komponente, die angepasst ist, mit der Mutter-Komponente (5138) verbunden zu sein;
noch bevorzugter worin der Betätigungs-Aufbau (580) darüber hinaus umfasst, ein erstes Trennmittel (5180) in einem tassenähnlichen Aufbau, das angepasst ist, entlang der Längsachse (530) des Ventilgehäuse-Aufbaus (520) eingerichtet zu sein, und worin ein erstes Trennmittel (5180) mit einem Boden ausgebildet ist, der auf der einen äußeren Seite des Bodens angepasst ist, mit der Hammer-Komponente (5110) in Kontakt zu kommen, bis die Verbindung zwischen dem Nippel (570) und der Klammer (599) getrennt wird, und auf der zweiten inneren Seite des Bodens angepasst ist, von dem Moment des Erwärmens der Betätigungs-Komponente (5100) mit der Betätigungs-Komponente (5100) wie beschrieben zum Ausüben einer Kraft auf die Hammer-Komponente (5110) in Kontakt zu kommen, und ein zweites Trennmittel (5190) in einem Balg-Aufbau, das von dem Moment des Erwärmens der Betätigungs-Komponente (5100) verlängert wird, und das sich entlang der Längsachse (530) des Ventilgehäuse-Aufbaus (520) erstreckt, worin es mit seinem einen Ende an der Mutter-Komponente (5138) und mit seinem zweiten Ende an dem tassenähnlichen ersten Trennmittel (5180) verankert ist, und worin das erste und zweite Trennmittel (5180, 5190) wie beschrieben zu jeder Zeit zwischen dem Gas oder der Flüssigkeit und der Betätigungs-Komponente (5100) trennt.

15. Ventil (510) nach Anspruch 12, worin das Ventil (510) darüber hinaus, ein federndes Mittel (5120) umfasst, das angepasst ist, ein fortgesetztes Vortreiben des Nippels (570) zu bewirken, nachdem dieser abgetrennt wurde, um diesen zu schieben;
vorzugsweise
worin das federnde Mittel (5120) eine Schraubenfeder ist, vorzugsweise worin das federnde Mittel (5120) eine Schraubenfeder ist, die sich auf die Mutter-Komponente (5138) stützt und die Hammer-Komponente (5110) vorspannt, um fortzufahren den Nippel (570) vorzutreiben, um diesen weg zu schieben, nachdem dieser wie beschrieben abgetrennt wurde;
oder
worin in dem Betätigungs-Aufbau (580)
die Hammer-Komponente (5110) als ein Zylinder mit einem inneren terrassiertem Raum ausgebildet ist, der auf seinem einen Ende offen und an dem zweiten Ende geschlossen ist, und die angepasst ist, sich in dem inneren Raum der Gehäuse-Komponente (520) entlang der Längsachse (530) zu bewegen, und
worin das eine Ende der Komponente (5110) angepasst ist, die federnden Mittel (5120) des Betätigungs-Aufbaus (580) darin aufzunehmen, und
worin eine Klammer-Öffnung (5161) benachbart zu dem geschlossenen zweiten Ende der Komponente (5110) zu dem Nippel (570) ausgebildet ist, worin diese parallel zu der Durchflussleitungs-Ebene und in einer Distanz davon ausgebildet ist, und worin die Klammer-Öffnung (5161) angepasst ist, den Nippel (570) darin aufzunehmen und diesen zu schieben, und worin sich dieser von dem Moment darin befindet, zu dem dieser von der Klammer-Komponente (5161) getrennt wurde.

## Revendications

1. Soupape à usage unique à base d'alliage à mémoire de forme (AMF) (10, 210, 310, 410), qui comprend :
un ensemble de logement (20) de soupape, qui est formé avec un axe longitudinal (30) et pourvu d'une ouverture d'écoulement d'entrée (40) pour le passage d'un gaz ou d'un liquide dans la soupape et d'une ouverture d'écoulement de sortie (50) pour le passage du gaz ou du liquide hors de la soupape (10) ; et
un élément d'ergot (70) destiné à être cisaillé et poussé à partir du moment de son sectionnement d'une manière qui permet le passage du gaz ou du liquide depuis ladite ouverture d'écoulement d'entrée (40) vers ladite ouverture d'écoulement de sortie (50), la soupape définie dans la description étant une soupape du type normalement fermé ; et
un ensemble d'actionnement (80) qui est approprié pour être installé à l'intérieur dudit ensemble de logement (20) de la soupape le long dudit axe longitudinal (30) et qui comprend un moyen de chauffage (90) et
un élément d'actionnement (100) en un matériau qui est de l'AMF et qui est destiné à être chauffé par ledit moyen de chauffage (90) d'une manière qui conduit à son extension le long de l'axe longitudinal (30) dudit ensemble de logement (20) ; et
un élément de marteau (110) qui est approprié pour transférer la force que ledit élément d'actionnement (100) exerce à partir dudit moment de chauffage dudit élément d'actionnement (100) le long dudit axe longitudinal (30) sur ledit ergot (70) et pour solliciter ledit ergot (70) en déformation afin de le sectionner ; et
ledit élément de marteau (110) est approprié en outre pour continuer à propulser ledit ergot (70) pour le pousser et l'éliminer après son sectionnement comme indiqué ; et
une séparation existe à tout moment entre ledit gaz ou liquide et ledit élément d'actionnement (100), ledit ergot (70), avant d'être sectionné, étant relié à ladite ouverture d'écoulement d'entrée (40),
**caractérisée en ce que** l'ouverture d'écoulement d'entrée (40) et l'ouverture d'écoulement de sortie (50) sont formées sensiblement sur au moins un plan (60) qui s'étend dans une direction dans laquelle il est sensiblement orthogonal à l'axe longitudinal (30) dudit ensemble de logement (20) et
ledit ensemble d'actionnement (80) comprend en outre un moyen élastique (120) qui est approprié pour provoquer la propulsion continue dudit ergot (70) après son sectionnement afin de pousser ledit ergot (70) de manière telle qu'il ne bloque pas ledit passage dudit gaz ou liquide depuis ladite ouverture d'écoulement d'entrée (40) vers ladite ouverture d'écoulement de sortie (50).

2. Soupape à usage unique à base d'AMF (510, 610), qui comprend :
un ensemble de logement (520) de soupape, qui est formé avec un axe longitudinal (530) et pourvu d'une ouverture d'écoulement d'entrée (540) pour le passage d'un gaz ou d'un liquide dans la soupape et d'une ouverture d'écoulement de sortie (550) pour le passage du gaz ou du liquide hors de la soupape (510) ; et
un élément d'ergot (570) destiné à être cisaillé et poussé à partir du moment de son sectionnement d'une manière qui permet l'arrêt du passage du gaz ou du liquide depuis ladite ouverture d'écoulement d'entrée (540) vers ladite ouverture d'écoulement de sortie (550), la soupape définie dans la description étant une soupape du type normalement ouvert ; et
un ensemble d'actionnement (580) qui est approprié pour être installé à l'intérieur dudit ensemble de logement (520) de la soupape le long dudit axe longitudinal (530) et qui comprend
un moyen de chauffage (590) et
un élément d'actionnement (5100) en un matériau qui est de l'AMF et qui est destiné à être chauffé par ledit moyen de chauffage (590) d'une manière qui conduit à son extension le long de l'axe longitudinal (530) dudit ensemble de logement (520) ; et
un élément de marteau (5110) qui est approprié pour transférer la force que ledit élément d'actionnement (5100) exerce à partir dudit moment de chauffage dudit élément d'actionnement (5100) le long dudit axe longitudinal (530) sur ledit ergot (570) et pour solliciter ledit ergot (570) en déformation afin de le sectionner ; et
ledit élément de marteau (5110) est approprié en outre pour continuer à propulser ledit ergot (570) pour le pousser et l'éliminer après son sectionnement comme indiqué ; et
ladite ouverture d'écoulement d'entrée (540) et ladite ouverture d'écoulement de sortie (550) étant formées sensiblement sur au moins un plan (560) qui s'étend dans une direction dans laquelle il est sensiblement orthogonal à l'axe longitudinal (530) dudit ensemble de logement (520) et
une séparation existant à tout moment entre ledit gaz ou liquide et ledit élément d'actionnement (5100), ladite soupape (510) comprenant en plus un élément de support (599) auquel ledit ergot (570) est relié avant son sectionnement et ledit support (599) étant approprié pour être situé dans l'ensemble de logement (520) de la soupape.

3. Soupape (10) selon la revendication 1,
où, dans ledit ensemble d'actionnement (80),
ledit élément d'actionnement (100) est formé sous forme d'un bâton allongé pourvu d'un espace interne (102) et ledit moyen de chauffage (90) est approprié pour être installé à l'intérieur dudit espace interne (102) pour le chauffage interne dudit élément d'actionnement (100) ;
de préférence, ledit élément d'actionnement (100) comprend en plus un élément isolant (195) qui est approprié pour être installé sur ledit élément d'actionnement (100) et s'étendre le long de celui-ci.

4. Soupape (10) selon la revendication 1,
ledit ensemble de logement (20) de la soupape comprenant un élément de logement (132) qui est formé avec un espace interne (134) qui s'étend le long dudit axe longitudinal (30) et qui est ouvert sur une extrémité dudit élément de logement (132).

5. Soupape (10) selon la revendication 4,
ledit ensemble de logement (20) de la soupape comprenant en outre un élément d'écrou (138), qui est approprié pour être fixé à ladite une extrémité dudit élément de logement (20), et un élément de bouchon (142) qui est approprié pour être relié audit élément d'écrou (138) ; de préférence
ledit élément d'actionnement (80) comprenant en outre
un premier moyen de séparation (180) dans une configuration ressemblant à une coupelle, qui est approprié pour être installé le long de l'axe longitudinal (30) dudit ensemble de logement (20) de la soupape et qui est formé avec un fond qui, sur un côté externe du fond, est approprié pour entrer en contact avec ledit élément de marteau (110) jusqu'au sectionnement de la liaison entre ledit ergot (70) et ladite ouverture d'écoulement d'entrée (40) et qui, sur le deuxième côté interne dudit fond, est approprié pour entrer en contact avec ledit élément d'actionnement (100) pour exercer une force sur ledit élément de marteau (110) comme indiqué, à partir du moment du chauffage dudit élément d'actionnement (100) et
un deuxième moyen de séparation (190) dans une configuration de soufflet qui est destiné à augmenter sa longueur à partir du moment du chauffage dudit élément d'actionnement (100) et ledit deuxième moyen de séparation (190) s'étendant le long dudit axe longitudinal (30) dudit ensemble de logement (20) de la soupape et étant ancré en l'une extrémité sur ledit élément d'écrou (138) et en sa deuxième extrémité sur ledit premier moyen de séparation (180) ressemblant à une coupelle et
le premier et le deuxième moyen de séparation (180, 190) séparant comme indiqué, à tout moment, le gaz et le liquide dudit élément d'actionnement (100).

6. Soupape (10) selon la revendication 4,
où, dans ledit ensemble d'actionnement (80),
ledit élément de marteau (110) est formé comme un cylindre présentant un espace en gradins (146) qui est ouvert en l'une extrémité (148) et fermé en la deuxième extrémité (150) et qui est approprié pour se déplacer à l'intérieur dudit espace interne (134) dudit élément de logement (132) le long dudit axe longitudinal (30) et
ladite une extrémité (148) dudit élément (110) étant appropriée pour recevoir en son sein ledit moyen élastique (120) de l'ensemble d'actionnement (80) et
à côté de ladite deuxième extrémité fermée (150) de l'élément (110), un passage d'écoulement (152) étant formé essentiellement sur un plan (60) qui, à partir du moment de l'assemblage de l'élément (110) dans la soupape (10), s'étend dans une direction dans laquelle il est sensiblement orthogonal à l'axe longitudinal (30) dudit logement (20) et ledit passage d'écoulement (152) permettant le passage du gaz ou du liquide depuis ladite ouverture d'écoulement d'entrée (40) vers ladite ouverture d'écoulement de sortie (50) après le sectionnement de la liaison entre ledit ergot (70) et ladite ouverture d'écoulement d'entrée (40) et sa poussée et son élimination et
ladite deuxième extrémité fermée (150) étant formée avec une ouverture support (161) vers l'ergot (70), qui est formée parallèlement audit plan de passage d'écoulement et à une certaine distance de celui-ci et ladite ouverture support (161) étant appropriée pour recevoir en son sein ledit ergot (70) et le pousser et ledit ergot se retrouvant dans celui-ci à partir du moment où il a été sectionné de ladite ouverture d'écoulement d'entrée (40).

7. Soupape (10, 210) selon la revendication 6,
ledit passage d'écoulement (152) étant formé sous la forme de deux ouvertures qui sont situées l'une contre l'autre au niveau des parois dudit espace en gradins (146) dudit élément de marteau (110) ;
un espace interne (102) dudit élément de logement (132) étant formé avec un segment (165) qui est approprié pour recevoir en son sein un segment de la deuxième extrémité fermée (150) de l'élément (110), dans lequel ladite ouverture support (161) pour ledit ergot (70) est formée, à partir du moment du sectionnement de la liaison entre ledit ergot (70) et ladite ouverture d'écoulement d'entrée (40) et sa poussée pendant que ledit ergot (70) se trouve à l'intérieur de ladite ouverture support (161) ; ou
ladite ouverture support (161) vers ledit ergot (70) au niveau de la deuxième extrémité fermée (150) de l'élément (110) étant formée en outre avec un moyen de passage d'écoulement (170) pour l'écoulement du gaz ou du liquide vers ledit ergot (70) à partir du moment de son sectionnement de ladite ouverture d'écoulement d'entrée (40) et pour ainsi le pousser vers la paroi dudit segment (165) de cet espace interne (102) d'une manière qui limite la possibilité de déplacement dudit élément de marteau (110) le long dudit axe longitudinal (30) dans une direction opposée à la direction de sollicitation par ledit moyen élastique (120) ; ou
le gradin formé comme indiqué dans ledit élément de marteau (110) étant formé avec au moins une ouverture sur sa circonférence de manière à permettre le passage de gaz ou de liquide à travers celle-ci depuis ladite ouverture d'écoulement d'entrée (40) dans l'espace (146) de l'élément après le sectionnement de la liaison entre ledit ergot (70) et ladite ouverture d'écoulement d'entrée (40) et la poussée et l'élimination dudit ergot (70) ; ou ledit passage d'écoulement (152) étant formé comme un passage d'écoulement annulaire (2115) autour d'une tige centrale (217) dans ledit élément de marteau (2110) ;
de préférence ladite soupape (210) comprenant en outre un moyen de filtration (215) qui est formé comme une gaine et qui est approprié pour être installé au niveau de l'espace interne dudit élément de logement (20) de la soupape autour dudit passage d'écoulement annulaire (2115) pour filtrer ledit gaz ou liquide lorsqu'il passe depuis ladite ouverture d'écoulement d'entrée (40) vers ladite ouverture d'écoulement de sortie (50) après le sectionnement de ladite liaison entre ledit ergot (70) et ladite ouverture d'écoulement d'entrée (40) et la poussée dudit ergot (70) comme indiqué après son sectionnement.

8. Soupape (210) selon la revendication 1,
ledit moyen élastique (120) formant un ressort hélicoïdal ; ou
ladite soupape (210) comprenant en outre un moyen de filtration (215) qui est approprié pour être installé dans l'ensemble de logement (20) de la soupape et pour filtrer le gaz ou le liquide lorsqu'il passe depuis l'ouverture d'écoulement d'entrée (40) vers ladite ouverture d'écoulement de sortie (50) après le sectionnement de ladite liaison entre ledit ergot (70) et ladite ouverture d'écoulement d'entrée (40) et la poussée dudit ergot (70) comme indiqué, après son sectionnement ; ou
ledit élément d'actionnement (100) étant formé comme un bâton allongé et ledit moyen de chauffage (90) étant approprié pour être installé autour dudit élément d'actionnement (100) pour le chauffage externe dudit élément d'actionnement (100).

9. Soupape (10) selon la revendication 5,
ledit moyen élastique (120) étant un ressort hélicoïdal qui s'appuie sur ledit élément d'écrou (138) et qui sollicite ledit élément de marteau (110) pour continuer à propulser dudit ergot (70) pour sa poussée après son sectionnement comme indiqué.

10. Soupape (310, 410) selon la revendication 4,
ladite soupape (310) comprenant en plus un moyen d'arrêt indépendant (310) pour maintenir un passage d'écoulement fermé lorsque ladite soupape (310) est soumise à une température élevée et ledit moyen d'arrêt (310) étant **caractérisé en ce que** ledit moyen (310) comprend un deuxième élément d'actionnement (3101) qui est également en un matériau qui est un AMF et ledit deuxième moyen d'actionnement étant situé le long dudit élément de logement (3132) dudit ensemble de logement (320) de la soupape et parallèlement à son axe longitudinal (330) et son chauffage à la température qui règne à proximité de la soupape (310) sollicitant ledit élément de logement (3132) en une déformation qui provoque son allongement à un niveau qui empêche le sectionnement de la liaison entre ledit ergot (370) et ladite ouverture d'écoulement d'entrée (340) et ce même si le premier élément d'actionnement (3100) était également chauffé à une température qui entraînerait son allongement également ;
de préférence, ledit élément de logement (3132) étant formé avec des épaulements (325, 326) qui font saillie depuis sa circonférence en ses deux extrémités et ledit deuxième élément d'actionnement (3101) étant approprié pour s'appuyer sur lesdits épaulements (325, 326) pour la sollicitation comme indiqué de l'élément de logement (3132) en une déformation qui provoque l'obtention d'un élément allongé (412) qui est approprié pour être installé sur ledit élément de logement (4132) tout en incluant ledit élément d'actionnement (4100) et ledit moyen de chauffage (490) en son sein.

11. Soupape (410) selon la revendication 4,
où, dans ledit ensemble d'actionnement (480),
ledit élément de marteau (4110) est formé avec deux surfaces d'extrémité (414, 416) qui sont reliées par un segment central de tige (417) qui s'étend le long dudit axe longitudinal (430) et les relie et ledit élément de marteau (4110) est approprié pour se déplacer à l'intérieur dudit espace interne (4134) le long dudit axe longitudinal (430) comme nécessaire pour sectionner ladite liaison entre ledit ergot (470) et ladite ouverture d'écoulement d'entrée (440) et pour être animé d'un mouvement de rotation autour dudit axe longitudinal (430) comme nécessaire pour pousser ledit ergot (470) et l'éliminer après son sectionnement comme indiqué et
ledit segment central de tige (417, conjointement avec lesdites deux surfaces d'extrémité (414, 416) formant un passage d'écoulement annulaire (4155) autour dudit segment central de tige et le passage d'écoulement annulaire (4155) étant est sensiblement formé sur un plan, s'étendant, à partir du moment de l'installation dudit élément (4110) dans ladite soupape (410), dans une direction dans laquelle il est sensiblement orthogonal à l'axe longitudinal (430) dudit logement (420) et ledit passage d'écoulement (4155) permettant le passage du gaz ou du liquide depuis ladite ouverture d'écoulement d'entrée (440) vers ladite ouverture d'écoulement de sortie (450) après le sectionnement de la liaison entre ledit ergot (470) et ladite ouverture d'écoulement d'entrée (440) et la poussée dudit ergot sectionné (470) et dans ledit segment central de tige (417), une ouverture de support (4161) pour ledit ergot (470) étant formée et ledit support (4161) étant formé dans une direction telle qu'à partir du moment de l'installation de la soupape (410), il se situe dans ledit plan des ouvertures d'écoulement d'entrée et de sortie et ladite ouverture support (4161) de l'ergot étant appropriée pour recevoir en son sein ledit ergot (470) et le déblayer, l'ergot se retrouvant en son sein à partir du moment de son sectionnement de ladite ouverture d'écoulement d'entrée (440) et
ledit moyen élastique (4120) étant un ressort de torsion qui s'appuie sur ladite deuxième extrémité (4137) de l'élément de logement (4132) et qui est approprié pour adsorber le déplacement dudit élément de marteau (4110) le long dudit axe longitudinal (430) et qui sollicite ledit élément de marteau (4110) pour continuer à propulser ledit ergot (470) pour le pousser en un déplacement en rotation tel qu'indiqué autour dudit axe longitudinal (430) après son sectionnement comme indiqué ;
de préférence, ledit ensemble d'actionnement (480) incluant en plus un élément de passage (4180) dans une configuration ressemblant à une coupelle, approprié pour être installé le long dudit axe longitudinal (430) dudit ensemble de logement (420) de la soupape et formé avec un fond (4182) qui est approprié, sur un côté interne, pour entrer en contact avec ledit élément d'actionnement (4100) pour exercer une force, comme indiqué, à partir du moment du chauffage dudit élément d'actionnement (4100), sur ledit élément de marteau (4110) et sur un moyen de séparation (4190), également dans une configuration ressemblant à une coupelle dont les parois sont des soufflets, qui est destiné à s'étendre à partir du moment du chauffage dudit élément d'actionnement (4100), et ledit moyen de séparation (4190) étant également approprié pour être installé le long dudit axe longitudinal (430) dudit ensemble de logement (420) de la soupape alors qu'il contient ledit élément de passage (4180) en son sein, le bord dudit moyen de séparation (4190) étant ancré sur l'élément de logement (420) de soupape et son fond (4182), sur son côté externe (4191), étant approprié pour entrer en contact avec ledit élément de marteau (4110), et qui est approprié, sur son autre côté interne (4192), pour entrer en contact avec ledit deuxième côté externe du fond (4182) dudit élément de passage (4180) et lorsque ledit moyen de séparation (4190) ne sépare pas, comme indiqué, à tout moment, le gaz ou le liquide dudit élément d'actionnement (4100).

12. Soupape (510) selon la revendication 2,
ledit élément de logement (5132) de l'ensemble de logement (520) de soupape étant formé au niveau de son extrémité fermée avec un espace interne (5134) et étant pourvu d'un premier passage (542) qui relie le passage d'écoulement depuis l'ouverture d'écoulement d'entrée (540) audit espace interne (538) et d'un deuxième passage (552) qui relie le passage d'écoulement depuis l'espace interne (538) à ladite ouverture d'écoulement de sortie (550).

13. Soupape (510) selon la revendication 12,
le premier et le deuxième passage (542, 552) étant formés avec une extension parallèle audit plan (560), l'un d'un côté du plan (560) et l'autre de son deuxième côté ;
ou
ledit espace interne (538) étant formé entre ledit premier et ledit deuxième passage (542, 552), avec un épaulement circonférentiel (539) qui s'étend autour dudit axe longitudinal (530) et ledit élément de marteau (5110) étant formé avec un épaulement circonférentiel (5139) qui, à partir du moment de la propulsion de l'élément de marteau (5110) dans un déplacement dans ledit ensemble de logement (520) de la soupape, est approprié pour fermer hermétiquement le contact avec ledit épaulement circonférentiel (539) dudit espace interne (538) ;
ou
dans ledit ensemble d'actionnement (580), ledit élément d'actionnement étant formé sous forme d'un bâton allongé pourvu d'un espace interne et ledit moyen de chauffage (590) étant approprié pour être installé à l'intérieur dudit espace interne (5134) pour le chauffage interne dudit élément d'actionnement (5100) ;
ou
ledit ensemble d'actionnement (580) comprenant en plus un élément isolant (5195) qui est approprié pour être installé sur ledit élément d'actionnement (5100) et s'étendre le long de celui-ci.

14. Soupape (510) selon la revendication 12,
ledit ensemble de logement (520) de la soupape comprenant un élément de logement (5132) qui est formé avec un espace interne (5134) qui s'étend le long dudit axe longitudinal (530) et qui est ouvert sur un côté dudit élément de logement (5132) ;
de préférence, ledit ensemble de logement (520) de la soupape comprenant en outre un élément d'écrou (5138) qui est approprié pour être fixé à ladite une extrémité dudit élément de logement (5132) et un élément qui est approprié pour être relié audit élément d'écrou (5138) ;
plus préférablement, ledit ensemble d'actionnement (580) comprenant en outre un premier moyen de séparation (5180) dans une configuration ressemblant une coupelle qui est approprié pour être installé le long dudit axe longitudinal (530) dudit ensemble de logement (520) de la soupape et ledit premier moyen de séparation (5180) étant formé avec un fond qui, sur un côté externe dudit fond, est approprié pour entrer en contact avec ledit élément de marteau (5110) jusqu'au sectionnement de la liaison entre ledit ergot (570) et ledit support (599) et qui, sur le deuxième côté interne dudit fond, est approprié pour entrer en contact avec ledit élément d'actionnement (5100) pour exercer une force, comme indiqué, à partir du moment du chauffage dudit élément d'actionnement (5100), sur ledit élément de marteau (5110), et un deuxième moyen de séparation (5190) dans une configuration d'un soufflet qui est destiné à être allongé à partir du moment du chauffage dudit élément d'actionnement (5100), qui s'étend le long dudit axe longitudinal (530) dudit ensemble de logement (520) de soupape et qui est ancré en une extrémité sur ledit élément d'écrou (5138) et sur sa deuxième extrémité audit premier moyen de séparation (5180) ressemblant à une coupelle et ledit premier et ledit deuxième moyen de séparation (5180, 5190) séparant comme indiqué à tout moment le gaz ou le liquide dudit élément d'actionnement (5100).

15. Soupape (510) selon la revendication 12,
ladite soupape (510) comprenant en outre un moyen élastique (5120) qui est approprié pour provoquer la propulsion continue dudit ergot (570) après son sectionnement afin de le déblayer ;
de préférence
ledit moyen élastique (5120) étant un ressort hélicoïdal, ledit moyen élastique (5120) étant de préférence un ressort hélicoïdal qui s'appuie sur ledit élément d'écrou (5138) et qui sollicite ledit élément de marteau (5110) pour continuer à propulser dudit ergot (570) pour sa poussée après son sectionnement comme indiqué ;
ou
dans ledit ensemble d'actionnement (580),
ledit élément de marteau (5110) étant formé comme un cylindre pourvu d'un espace interne en gradins qui est ouvert en l'une extrémité et fermé en la deuxième extrémité et approprié pour se déplacer à l'intérieur dudit espace interne dudit élément de logement (520) le long dudit axe longitudinal (530) et
ladite une extrémité dudit élément (5110) étant appropriée pour recevoir en son sein ledit moyen élastique (5120) de l'ensemble d'actionnement (580) et
à côté de ladite deuxième extrémité fermée dudit élément (5110), une ouverture support (5161) étant formée pour l'ergot (570), qui est formée parallèlement audit plan de passage d'écoulement et à une certaine distance de celui-ci et ladite ouverture de support (5161) étant appropriée pour recevoir en son sein ledit ergot (570) et le pousser et ledit ergot se retrouvant dans celui-ci à partir du moment de son sectionnement dudit élément support (5161).
